# EUROPEAN PATENT APPLICATION

(11) **EP 4 657 224 A1**
(43) Date of publication of application: **03.12.2025**
(21) Application number: 23922421.5
(22) Date of filing: 22.11.2023
(51) Int. Cl.: G06F 3/04817

(54) **APPLICATION MANAGEMENT METHOD AND ELECTRONIC DEVICE**

(30) Priority: 13.02.2023 CN 202310152056
(71) Applicant: Huawei Technologies Co., Ltd., Shenzhen, Guangdong 518129 (CN)
(72) Inventor: ZHANG, Yanan, Shenzhen, Guangdong 518129 (CN); WANG, Hongjun, Shenzhen, Guangdong 518129 (CN)
(74) Representative: Epping - Hermann - Fischer
(86) International application number: PCT/CN2023/133301
(87) International publication number: WO 2024/169305

(57) **Abstract**

This application provides an application management method and an electronic device. A user may drag and pin an applet icon, a video play icon, an application plugin icon, or the like on an application interface to a taskbar. An icon indicating a combination display manner of a first window and a second window can also be pinned to the taskbar. When the user taps the icon, the electronic device may restore the combination display manner of the first window and the second window. The taskbar may further display a target folder indicating a recent task list, and the user may operate the target folder, so that the electronic device displays the recent task list. According to the application management method and the electronic device that are provided in this application, a method of managing an application or an application function like an applet and a quick application by the electronic device is simplified, a step of opening a plurality of windows by the electronic device is simplified, and a method of managing a recent task by the electronic device is also simplified. This helps improve application management efficiency of the electronic device and improve user experience.

## Description

This application claims priority to Chinese Patent Application No. 202310152056.8, filed with the China National Intellectual Property Administration on February 13, 2023 and entitled "APPLICATION MANAGEMENT METHOD AND ELECTRONIC DEVICE", which is incorporated herein by reference in its entirety.

### TECHNICAL FIELD

This application relates to the field of terminal device software, and specifically, to an application management method and an electronic device.

### BACKGROUND

A taskbar is a quick and effective manner of implementing application management. Usually, the taskbar occupies a fixed display area on a screen of an electronic device. With development of hardware technologies and software technologies, an electronic device needs to manage an increasing quantity of applications, and functions of applications are becoming more diverse. In an existing manner of managing an application via a taskbar, it is increasingly difficult to meet a requirement of a user for efficient and quick management of an application, and a fixed display area of a screen of an electronic device is usually occupied, causing low utilization efficiency of the screen of the electronic device.

Therefore, it is worth considering improving a function of the taskbar to improve efficiency of managing an application via the taskbar.

### SUMMARY

This application provides an application management method. A user may drag an icon of a target application on a user interface to a taskbar and pin the icon to the taskbar, and the taskbar may also display an icon indicating a multi-window combination display manner and an icon indicating a recent task list, to improve application management efficiency of an electronic device.

According to a first aspect, an application management method is provided, including: An electronic device displays a user interface of a target application, where the user interface of the target application includes a reference icon, and the reference icon is any one of the following icons: an applet icon, a quick application icon, an application plugin icon, or a video play icon; in response to a target operation, the electronic device displays a target icon on a taskbar, where the target icon corresponds to the reference icon, and the target operation is dragging the reference icon from the user interface of the target application to the taskbar; and in response to an operation performed on the target icon, the electronic device displays a user interface corresponding to the reference icon.

When the reference icon is an applet icon or a quick application icon, the target application may be an application that provides an entry for obtaining an applet or a quick application, for example, a "WeChat" application or an "Alipay" application. The target operation may be dragging an applet icon or a quick application icon on a user interface of an application such as the "WeChat" application or the "Alipay" application to the taskbar.

The application plugin icon may also be referred to as an application card icon, an application window icon, an application control icon, or the like. When the reference icon is an application plugin icon, the target application may be an application that displays the application plugin icon, an application card icon, an application control icon, or the like on the user interface, for example, a "desktop" application or a "leftmost screen" application. The target operation may be dragging the application plugin icon to the taskbar.

The video play icon may also be referred to as a video play card, a video play control, a video play window, or the like. When the reference icon is a video play icon, the target application may be an application that provides a video play window, a video play card, a picture including a video play link, or the like, for example, a "Huawei Video" application or a "Youku" application. The video play window may be considered as a video play icon, and the target operation may be dragging the video play icon to the taskbar.

That the target icon corresponds to the reference icon may be understood as follows: If the reference icon is an applet icon, when the target icon corresponding to the reference icon is tapped, the electronic device may open a corresponding applet.

An icon corresponding to an application function of the target application is fixedly displayed on the taskbar in a manner of directly dragging an icon from the user interface of the target application. This operation better aligns with user operation intuition. In this technical solution, ease of use of the taskbar is improved, management efficiency of an applet, a quick application, and the like corresponding to the taskbar is improved, and user experience is improved.

With reference to the first aspect, in some implementations of the first aspect, when the taskbar is hidden, the electronic device displays the taskbar in response to the target operation.

When the taskbar is hidden, that is, in a state in which the taskbar is not displayed, the electronic device may set a plurality of trigger events to trigger the taskbar to switch from a non-displayed state to a displayed state. That a user drags the reference icon on the interface of the target application to the taskbar may be used as a trigger event for triggering the taskbar to perform state switching.

In this technical solution, that the user drags the reference icon of the user interface of the target application is used as the trigger event for triggering the taskbar to switch from the hidden state to the displayed state. This simplifies an operation of pinning icons such as an applet icon and a quick application icon to the taskbar in the hidden state, and improves management efficiency of the electronic device for a corresponding applet and quick application via the taskbar in this case, further improving ease of use of the taskbar, and improving user experience.

With reference to the first aspect, in some implementations of the first aspect, the electronic device displays the user interface of an application corresponding to the reference icon in a full-screen window manner or a floating window manner.

A full-screen window may be understood as that a user interface of an application fully covers a screen of an electronic device, and a floating window may be understood as that a window used to display a user interface of an application is displayed on a user interface of another application in a non-fully covered manner.

In a possible case, if the electronic device currently displays the "desktop" application, the electronic device displays the user interface of the application corresponding to the reference icon in a full-screen window manner. If the electronic device currently displays a non-"desktop" application in a full-screen window manner, the electronic device displays the user interface of the application corresponding to the reference icon in a floating window manner.

The electronic device may display, in a plurality of different manners, an application corresponding to the target icon pinned to the taskbar, and different opening manners are applicable to different application scenarios. Implementation of this technical solution helps further improve ease of use of the taskbar in different application scenarios, improve a manner in which the electronic device manages an application in different application scenarios via the taskbar, and improve user experience.

In a possible implementation, when the target icon corresponds to the applet icon or the quick application icon, a display area of the target icon on the taskbar is a first icon display area; or when the target icon corresponds to the application plugin icon or the video play icon, a display area of the target icon on the taskbar is a second icon display area, and the first icon display area is smaller than the second icon display area.

Compared with the applet icon or the quick application icon, the application plugin icon or the video play icon may be used to display more application information, so that the user can obtain some application information without operating the icon.

For different types of target icons, display areas of different sizes may be set for the taskbar, and a larger display area may display more application information. In this technical solution, different types of icons pinned to the taskbar are managed in different manners. This simplifies a step of obtaining application information (or application content) of some applications by the user, and improves efficiency of displaying the application information by the electronic device. In addition, functions of the taskbar are enriched, and ease of use of the taskbar is improved.

With reference to the first aspect, in some implementations of the first aspect, the application plugin icon indicates any one of the following: a target desktop plugin, a target desktop card, a target leftmost screen plugin, or a target leftmost screen card.

With reference to the first aspect, in some implementations of the first aspect, the target icon is used to display information displayed by the target desktop plugin, or the target icon is used to display information displayed by the target desktop card, or the target icon is used to display information displayed by the target leftmost screen plugin, or the target icon is used to display information displayed by the target leftmost screen card.

In this technical solution, the electronic device may directly enter an information display page of the plugin or card by operating the target icon on the taskbar. This helps improve efficiency of displaying the plugin and card information by the electronic device, reduce operation steps, and improve user experience.

With reference to the first aspect, in some implementations of the first aspect, the video play icon indicates a play card of a target video or a play window of the target video.

With reference to the first aspect, in some implementations of the first aspect, the electronic device displays a play interface of the target video.

In this technical solution, the electronic device may directly open the play interface of the target video by directly operating the target icon on the taskbar. This helps simplify operation steps of playing a video by the electronic device, improve operation efficiency of playing the target video by the electronic device, and improve user experience.

According to a second aspect, an application management method is provided, including: An electronic device displays a target icon on a taskbar in response to a target operation, where the target icon indicates a combination display manner of a first window and a second window, and the first window and the second window are any one of the following: a full-screen window, a split-screen window, or a floating window; and the electronic device displays the first window and the second window in the combination display manner in response to an operation performed on the target icon.

In some examples, the first window is a full-screen window, and the second window is a floating window. Alternatively, the first window is a split-screen window, and the second window is a floating window. Alternatively, the first window is a split screen window, and the second window is a split screen window. Alternatively, the first window is a floating window, and the second window is a floating window.

In some other examples, the target icon indicates a combination display manner of the first window, the second window, and a third window, where the first window and the second window are split-screen windows, and the third window is a floating window.

The target icon indicates a combination display manner of the first window and the second window, or may be understood as that the target icon indicates a combination display manner of the first application and the second application. In other words, both the first window and the second window are application windows, or both the first window and the second window are used to display a user interface of an application.

In some examples, the target icon further indicates a running status of an application corresponding to the first window and a running status of an application corresponding to the second window. The running status may be a historical running status of an application, or may be a current running status of an application.

In this technical solution, an icon indicating a multi-window combination display manner may be stored in the taskbar of the electronic device, and a user may also tap the icon to open a plurality of stored windows in the multi-window combination display manner. In a multi-task parallel processing scenario, a multi-window combination display manner becomes more frequent. Implementation of this technical solution simplifies efficiency of saving and restoring multi-window combination display by the electronic device, helps improve management efficiency of the electronic device for applications in combination display in a multi-task parallel processing scenario, enriches functions of the taskbar, and improves ease of use of the taskbar.

With reference to the second aspect, in some implementations of the second aspect, the taskbar includes a first display area and a second display area, the first display area is used to display a resident icon, the second display area is used to display a recommended icon, the resident icon indicates a resident function, the recommended icon indicates a recommended function, and the electronic device displays the target icon in the second area.

The resident icon may be understood as an icon fixedly displayed on the taskbar, and the recommended icon may be understood as an icon dynamically displayed by the electronic device. The resident function is a function of an application corresponding to the resident icon, and the recommended function is a function of an application corresponding to the recommended icon.

In some examples, the electronic device may display the recommended icon in the second display area based on one or more of the following information, or the electronic device may provide a recommended function based on one or more of the following information: historical information, scenario information, or user information. The historical information indicates a historical use status (including a software use history and a hardware use history) of the electronic device, the scenario information indicates a use scenario of the electronic device, and the user information indicates a user who uses the electronic device.

The electronic device may perform function partitioning on the taskbar, and display, in a display area of the recommended icon, an icon indicating multi-window combination display, or provide a multi-window combination display manner for the user via a recommended function. The user may choose to save or not to save a current multi-window combination display manner according to a use situation. Implementation of this technical solution clarifies function division of the taskbar, further improves ease of use of the taskbar, and improves efficiency of managing, via the taskbar, applications that run concurrently in a multi-window combination display state.

With reference to the second aspect, in some implementations of the second aspect, the taskbar includes a first display area and a second display area, the first display area is used to display a resident icon, the second display area is used to display a recommended icon, the resident icon indicates a resident function, the recommended icon indicates a recommended function, and when the target icon is displayed in the second display area, in response to an operation of dragging the target icon from the second display area to the first display area, the electronic device displays the target icon in the first display area.

The electronic device may perform function partitioning on the taskbar, and display, in a display area of the recommended icon, an icon indicating multi-window combination display, or provide a multi-window combination display manner for the user via a recommended function. The user may choose to save or not to save a current multi-window combination display manner according to a use situation. Implementation of this technical solution clarifies function division of the taskbar, further improves ease of use of the taskbar, and improves efficiency of managing, via the taskbar, applications that run concurrently in a multi-window combination display state.

With reference to the second aspect, in some implementations of the second aspect, the taskbar includes a first display area and a second display area, the first display area is used to display a resident icon, the second display area is used to display a recommended icon, the resident icon indicates a resident function, the recommended icon indicates a recommended function, the electronic device displays a first recommended icon in the second area, and the first recommended icon indicates to save the combination display manner of the first window and the second window; and the electronic device displays the target icon in the first display area in response to an operation performed on the first recommended icon.

The electronic device may perform function partitioning on the taskbar, and display, in a display area of the recommended icon, an icon indicating multi-window combination display, or provide a multi-window combination display manner for the user via a recommended function. The user may choose to save or not to save a current multi-window combination display manner according to a use situation. Implementation of this technical solution clarifies function division of the taskbar, further improves ease of use of the taskbar, and improves efficiency of managing, via the taskbar, applications that run concurrently in a multi-window combination display state.

With reference to the second aspect, in some implementations of the second aspect, the first window is a floating window, and the electronic device displays a prompt control in response to an operation of touching and holding the first window, where the prompt control is used to prompt to save the combination display manner of the first window and the second window; and the electronic device displays the target icon on the taskbar in response to a confirmation operation.

In a possible implementation, the electronic device displays a prompt control in response to an operation of touching and holding the second window, where the prompt control is used to prompt to save the combination display manner of the first window and the second window.

The user may implement a function of saving the multi-window combination display manner by directly operating the window. In other words, when the taskbar is in a hidden state, the user may also efficiently complete an operation of saving the multi-window combination display manner. This operation better aligns with user operation intuition. This improves efficiency of managing an application by the electronic device in a case of multi-task processing. Implementation of the function may not depend on the taskbar. Therefore, implementation of this technical solution further helps improve utilization efficiency of a screen of the electronic device to some extent.

With reference to the second aspect, in some implementations of the second aspect, the combination display manner includes any one of the following: both the first window and the second window are displayed in a split-screen window manner; or one of the first window and the second window is displayed in a full-screen window manner, and the other window is displayed in a floating window manner; or both the first window and the second window are displayed in a floating window manner; or one of the first window and the second window is displayed in a split-screen window manner, and the other window is displayed in a floating window manner.

According to a third aspect, an application management method is provided, including: An electronic device displays a target folder on a taskbar, where the target folder indicates a recent task list, the target folder includes at least one task icon, and the at least one task icon indicates a task in the recent task list; and the electronic device displays the recent task list in response to an operation of opening the target folder.

In this technical solution, a recent task list is indicated by a folder on the taskbar, and the recent task list is displayed through an operation of opening the folder. Implementation of this technical solution helps simplify an operation of a manner in which the electronic device displays the recent task list, and improve management efficiency of the electronic device for a recent task included in the recent task list.

With reference to the third aspect, in some implementations of the third aspect, the taskbar includes a first display area and a second display area, the first display area is used to display a resident icon, the second display area is used to display a recommended icon, the resident icon indicates a resident function, the recommended icon indicates a recommended function, and the electronic device displays the target folder in the second display area.

The resident icon may be understood as an icon fixedly displayed on the taskbar, and the recommended icon may be understood as an icon dynamically displayed by the electronic device. The resident function is a function of an application corresponding to the resident icon, and the recommended function is a function of an application corresponding to the recommended icon.

In some examples, the electronic device may display the recommended icon in the second display area based on one or more of the following information, or the electronic device may provide a recommended function based on one or more of the following information: historical information, scenario information, and user information. The historical information indicates a historical use status (including a software use history and a hardware use history) of the electronic device, the scenario information indicates a use scenario of the electronic device, and the user information indicates a user who uses the electronic device.

The electronic device may perform function partitioning on the taskbar, and display, in a display area of the recommended icon, an icon indicating the recent task list, or provide a function of opening the recent task list for the user via a recommended function, and the user may choose to use or not to use the function. Implementation of this technical solution clarifies function division of the taskbar, further improves ease of use of the taskbar, and improves management efficiency of the electronic device for the recent task in the recent task list.

With reference to the third aspect, in some implementations of the third aspect, the operation of opening the target folder includes: tapping the target folder or dragging the target folder to a display area outside the taskbar.

The user may open, in a plurality of manners, the folder indicating the recent task list. Implementation of this technical solution helps reduce a probability of a misoperation on the target folder, and improve management efficiency of the electronic device for the recent task.

With reference to the third aspect, in some implementations of the third aspect, the at least one task icon includes an icon of a target application, the target application includes a plurality of application instances, and the icon of the target application indicates the plurality of application instances; the electronic device displays a plurality of application cards, where the plurality of application cards correspond to the plurality of application instances; and in response to an operation performed on a target application card, the electronic device displays a user interface of an application instance corresponding to the target application card, where the plurality of application cards include the target application card.

In this technical solution, the electronic device may display, in the recent task list, cards of a plurality of application instances corresponding to a same application, and the user may directly operate the application cards corresponding to the application instances to enter user interfaces of the application instances. This helps improve management efficiency of the electronic device for different application instances of the same application, and helps improve user experience.

According to a fourth aspect, an application management method is provided, where the method is applied to an electronic device, and the method includes: displaying a first application; and in response to an operation performed on a target icon on a taskbar, displaying, by the electronic device in a first preset display manner, a user interface of an application corresponding to the target icon, where the first preset display manner includes full-screen window display or floating window display, and the first preset display manner is determined based on the first application.

With reference to the fourth aspect, in some implementations of the fourth aspect, if the first application currently displayed by the electronic device is a desktop application, the electronic device displays the user interface of the application corresponding to the target icon in a full-screen window manner; or if the first application currently displayed by the electronic device is a non-desktop application, the electronic device displays the user interface of the application corresponding to the target icon in a floating window manner.

With reference to the fourth aspect, in some implementations of the fourth aspect, the first preset display manner is determined based on an on or off state of a first control switch, where the on state of the first control switch indicates to display, in a floating window, the user interface of the application corresponding to the target icon; and if the first control switch is on, the electronic device displays the user interface of the application corresponding to the target icon in a floating window manner.

With reference to the fourth aspect, in some implementations of the fourth aspect, the electronic device displays the taskbar in a second preset display manner, where the second preset display manner includes fixed display or floating display, and the second preset display manner is determined based on a screen attribute of the electronic device.

With reference to the fourth aspect, in some implementations of the fourth aspect, the electronic device displays the taskbar in a fixed display manner if the screen attribute of the electronic device meets a first preset condition; or the electronic device displays the taskbar in a floating display manner if the screen attribute of the electronic device meets a second preset condition, where the first preset condition is different from the second preset condition.

With reference to the fourth aspect, in some implementations of the fourth aspect, the second preset display manner is determined based on the first application currently displayed by the electronic device, and if the first application currently displayed by the electronic device is a desktop application, the electronic device displays the taskbar in a fixed display manner; or if the first application currently displayed by the electronic device is a non-desktop application, the electronic device displays the taskbar in a floating display manner.

With reference to the fourth aspect, in some implementations of the fourth aspect, the second preset display manner is determined based on an on or off state of a second control switch, where the on state of the second control switch indicates to display the taskbar in a fixed display manner, and if the second control switch is on, the electronic device displays the taskbar in the fixed display manner.

For related explanations and beneficial effects of the following technical solutions, refer to content in the first aspect to the third aspect. For brevity, details are not described below again.

According to a fifth aspect, an electronic device is provided. The electronic device includes a processor and a memory, the memory is configured to store program instructions, the processor is configured to: display a user interface of a target application, where the user interface of the target application includes a reference icon, and the reference icon is any one of the following icons: an applet icon, a quick application icon, an application plugin icon, or a video play icon; in response to a target operation, display a target icon on a taskbar, where the target icon corresponds to the reference icon, and the target operation is dragging the reference icon from the user interface of the target application to the taskbar; and in response to an operation performed on the target icon, display a user interface corresponding to the reference icon.

With reference to the fifth aspect, in some implementations of the fifth aspect, when the taskbar is hidden, the processor is further configured to display the taskbar in response to the target operation. With reference to the fifth aspect, in some implementations of the fifth aspect, the processor is further configured to display the user interface of an application corresponding to the reference icon in a full-screen window manner or a floating window manner.

In a possible implementation, when the target icon corresponds to the applet icon or the quick application icon, a display area of the target icon on the taskbar is a first icon display area; or when the target icon corresponds to the application plugin icon or the video play icon, a display area of the target icon on the taskbar is a second icon display area, and the first icon display area is smaller than the second icon display area.

With reference to the fifth aspect, in some implementations of the fifth aspect, the application plugin icon indicates any one of the following: a target desktop plugin, a target desktop card, a target leftmost screen plugin, or a target leftmost screen card.

With reference to the fifth aspect, in some implementations of the fifth aspect, the target icon is used to display information displayed by the target desktop plugin, or the target icon is used to display information displayed by the target desktop card, or the target icon is used to display information displayed by the target leftmost screen plugin, or the target icon is used to display information displayed by the target leftmost screen card.

With reference to the fifth aspect, in some implementations of the fifth aspect, the video play icon indicates a play card of a target video or a play window of the target video.

With reference to the fifth aspect, in some implementations of the fifth aspect, the processor is further configured to display a play interface of the target video.

According to a sixth aspect, an electronic device is provided. The electronic device includes a processor and a memory, the memory is configured to store program instructions, the processor is configured to: display a target icon on a taskbar in response to a target operation, where the target icon indicates a combination display manner of a first window and a second window, and the first window and the second window are any one of the following: a full-screen window, a split-screen window, or a floating window; and display the first window and the second window in the combination display manner in response to an operation performed on the target icon.

With reference to the sixth aspect, in some implementations of the sixth aspect, the taskbar includes a first display area and a second display area, the first display area is used to display a resident icon, the second display area is used to display a recommended icon, the resident icon indicates a resident function, the recommended icon indicates a recommended function, and the processor is further configured to display the target icon in the second area.

With reference to the sixth aspect, in some implementations of the sixth aspect, the taskbar includes a first display area and a second display area, the first display area is used to display a resident icon, the second display area is used to display a recommended icon, the resident icon indicates a resident function, the recommended icon indicates a recommended function, and when the target icon is displayed in the second display area, in response to an operation of dragging the target icon from the second display area to the first display area, the processor is further configured to display the target icon in the first display area.

With reference to the sixth aspect, in some implementations of the sixth aspect, the taskbar includes a first display area and a second display area, the first display area is used to display a resident icon, the second display area is used to display a recommended icon, the resident icon indicates a resident function, the recommended icon indicates a recommended function, and the processor is further configured to display a first recommended icon in the second area, where the first recommended icon indicates to save the combination display manner of the first window and the second window, and in response to an operation performed on the first recommended icon, the processor is further configured to display the target icon in the first display area.

With reference to the sixth aspect, in some implementations of the sixth aspect, the first window is a floating window, and the processor is further configured to: display a prompt control in response to an operation of touching and holding the first window, where the prompt control is used to prompt to save the combination display manner of the first window and the second window; and display the target icon on the taskbar in response to a confirmation operation.

With reference to the sixth aspect, in some implementations of the sixth aspect, the combination display manner includes any one of the following: both the first window and the second window are displayed in a split-screen window manner; or one of the first window and the second window is displayed in a full-screen window manner, and the other window is displayed in a floating window manner; or both the first window and the second window are displayed in a floating window manner; or one of the first window and the second window is displayed in a split-screen window manner, and the other window is displayed in a floating window manner.

According to a seventh aspect, an electronic device is provided. The electronic device includes a processor and a memory, the memory is configured to store program instructions, and the processor is configured to: display a target folder on a taskbar, where the target folder indicates a recent task list, the target folder includes at least one task icon, and the at least one task icon indicates a task in the recent task list; and display the recent task list in response to an operation of opening the target folder.

With reference to the seventh aspect, in some implementations of the seventh aspect, the taskbar includes a first display area and a second display area, the first display area is used to display a resident icon, the second display area is used to display a recommended icon, the resident icon indicates a resident function, the recommended icon indicates a recommended function, and the processor is further configured to display the target folder in the second display area.

With reference to the seventh aspect, in some implementations of the seventh aspect, the operation of opening the target folder includes: tapping the target folder or dragging the target folder to a display area outside the taskbar.

With reference to the seventh aspect, in some implementations of the seventh aspect, the at least one task icon includes an icon of a target application, the target application includes a plurality of application instances, and the icon of the target application indicates the plurality of application instances; the processor is further configured to display a plurality of application cards, where the plurality of application cards correspond to the plurality of application instances; and in response to an operation performed on a target application card, the processor is further configured to display a user interface of an application instance corresponding to the target application card, where the plurality of application cards include the target application card.

According to an eighth aspect, an electronic device is provided. The electronic device includes a processor and a memory, the memory is configured to store program instructions, and the processor is configured to: in response to an operation performed on a target icon on a taskbar, display a user interface of an application corresponding to the target icon in a first preset display manner, where the first preset display manner includes full-screen window display or floating window display, and the first preset display manner is determined based on an application currently displayed by the electronic device.

With reference to the eighth aspect, in some implementations of the eighth aspect, if the application currently displayed by the electronic device is a desktop application, the processor is specifically configured to display the user interface of the application corresponding to the target icon in a full-screen window manner; or if the application currently displayed by the electronic device is a non-desktop application, the processor is specifically configured to display the user interface of the application corresponding to the target icon in a floating window manner.

With reference to the eighth aspect, in some implementations of the eighth aspect, the first preset display manner is determined based on an on or off state of a first control switch, where the on state of the first control switch indicates to display, in a floating window, the user interface of the application corresponding to the target icon; and if the first control switch is on, the processor is further configured to display the user interface of the application corresponding to the target icon in a floating window manner.

With reference to the eighth aspect, in some implementations of the eighth aspect, the processor is further configured to display the taskbar in a second preset display manner, where the second preset display manner includes fixed display or floating display, and the second preset display manner is determined based on a screen attribute of the electronic device.

With reference to the eighth aspect, in some implementations of the eighth aspect, the processor is further configured to display the taskbar in a fixed display manner if the screen attribute of the electronic device meets a first preset condition; or the processor is further configured to display the taskbar in a floating display manner if the screen attribute of the electronic device meets a second preset condition, where the first preset condition is different from the second preset condition.

With reference to the eighth aspect, in some implementations of the eighth aspect, the second preset display manner is determined based on an application currently displayed by the electronic device, and if the application currently displayed by the electronic device is a desktop application, the processor is configured to display the taskbar in a fixed display manner; or if the application currently displayed by the electronic device is a non-desktop application, the processor is configured to display the taskbar in a floating display manner.

With reference to the eighth aspect, in some implementations of the eighth aspect, the second preset display manner is determined based on an on or off state of a second control switch, the on state of the second control switch indicates to display the taskbar in a fixed display manner, and if the second control switch is on, the processor is configured to display the taskbar in the fixed display manner.

According to a ninth aspect, an application management apparatus is provided. The application management apparatus includes a processing module, and the processing module is configured to: display a user interface of a target application, where the user interface of the target application includes a reference icon, and the reference icon is any one of the following icons: an applet icon, a quick application icon, an application plugin icon, or a video play icon; in response to a target operation, display a target icon on a taskbar, where the target icon corresponds to the reference icon, and the target operation is dragging the reference icon from the user interface of the target application to the taskbar; and in response to an operation performed on the target icon, display a user interface corresponding to the reference icon.

With reference to the ninth aspect, in some implementations of the ninth aspect, when the taskbar is hidden, the processing module is further configured to display the taskbar in response to the target operation.

With reference to the ninth aspect, in some implementations of the ninth aspect, the processing module is further configured to display the user interface of an application corresponding to the reference icon in a full-screen window manner or a floating window manner.

In a possible implementation, when the target icon corresponds to the applet icon or the quick application icon, a display area of the target icon on the taskbar is a first icon display area; or when the target icon corresponds to the application plugin icon or the video play icon, a display area of the target icon on the taskbar is a second icon display area, and the first icon display area is smaller than the second icon display area.

With reference to the ninth aspect, in some implementations of the ninth aspect, the application plugin icon indicates any one of the following: a target desktop plugin, a target desktop card, a target leftmost screen plugin, or a target leftmost screen card.

With reference to the ninth aspect, in some implementations of the ninth aspect, the target icon is used to display information displayed by the target desktop plugin, or the target icon is used to display information displayed by the target desktop card, or the target icon is used to display information displayed by the target leftmost screen plugin, or the target icon is used to display information displayed by the target leftmost screen card.

With reference to the ninth aspect, in some implementations of the ninth aspect, the video play icon indicates a play card of a target video or a play window of the target video.

With reference to the ninth aspect, in some implementations of the ninth aspect, the processing module is further configured to display a play interface of the target video.

According to a tenth aspect, an application management apparatus is provided. The application management apparatus includes a processing module, and the processing module is configured to: display a target icon on a taskbar in response to a target operation, where the target icon indicates a combination display manner of a first window and a second window, and the first window and the second window are any one of the following: a full-screen window, a split-screen window, or a floating window; and display the first window and the second window in the combination display manner in response to an operation performed on the target icon.

With reference to the tenth aspect, in some implementations of the tenth aspect, the taskbar includes a first display area and a second display area, the first display area is used to display a resident icon, the second display area is used to display a recommended icon, the resident icon indicates a resident function, the recommended icon indicates a recommended function, and the processing module is further configured to display the target icon in the second area.

With reference to the tenth aspect, in some implementations of the tenth aspect, the taskbar includes a first display area and a second display area, the first display area is used to display a resident icon, the second display area is used to display a recommended icon, the resident icon indicates a resident function, the recommended icon indicates a recommended function, and when the target icon is displayed in the second display area, in response to an operation of dragging the target icon from the second display area to the first display area, the processing module is further configured to display the target icon in the first display area.

With reference to the tenth aspect, in some implementations of the tenth aspect, the taskbar includes a first display area and a second display area, the first display area is used to display a resident icon, the second display area is used to display a recommended icon, the resident icon indicates a resident function, the recommended icon indicates a recommended function, and the processing module is further configured to display a first recommended icon in the second area, where the first recommended icon indicates to save the combination display manner of the first window and the second window; and in response to an operation performed on the first recommended icon, the processing module is further configured to display the target icon in the first display area.

With reference to the tenth aspect, in some implementations of the tenth aspect, the first window is a floating window, and the processing module is further configured to: display a prompt control in response to an operation of touching and holding the first window, where the prompt control is used to prompt to save the combination display manner of the first window and the second window; and display the target icon on the taskbar in response to a confirmation operation.

With reference to the tenth aspect, in some implementations of the tenth aspect, the combination display manner includes any one of the following: both the first window and the second window are displayed in a split-screen window manner; or one of the first window and the second window is displayed in a full-screen window manner, and the other window is displayed in a floating window manner; or both the first window and the second window are displayed in a floating window manner; or one of the first window and the second window is displayed in a split-screen window manner, and the other window is displayed in a floating window manner.

According to an eleventh aspect, an application management apparatus is provided. The application management apparatus includes a processing module, and the processing module is configured to: display a target folder on a taskbar, where the target folder indicates a recent task list, the target folder includes at least one task icon, and the at least one task icon indicates a task in the recent task list; and display the recent task list in response to an operation of opening the target folder.

With reference to the eleventh aspect, in some implementations of the eleventh aspect, the taskbar includes a first display area and a second display area, the first display area is used to display a resident icon, the second display area is used to display a recommended icon, the resident icon indicates a resident function, the recommended icon indicates a recommended function, and the processing module is further configured to display the target folder in the second display area.

With reference to the eleventh aspect, in some implementations of the eleventh aspect, the operation of opening the target folder includes: tapping the target folder or dragging the target folder to a display area outside the taskbar.

With reference to the eleventh aspect, in some implementations of the eleventh aspect, the at least one task icon includes an icon of a target application, the target application includes a plurality of application instances, and the icon of the target application indicates the plurality of application instances; and the processing module is further configured to display a plurality of application cards, where the plurality of application cards correspond to the plurality of application instances; in response to an operation performed on a target application card, the processing module is further configured to display a user interface of an application instance corresponding to the target application card, where the plurality of application cards include the target application card.

According to a twelfth aspect, an application management apparatus is provided. The application management apparatus includes a processing module, and the processing module is configured to: in response to an operation performed on a target icon on a taskbar, display, by the apparatus in a first preset display manner, a user interface of an application corresponding to the target icon, where the first preset display manner includes full-screen window display or floating window display, and the first preset display manner is determined based on an application currently displayed by the apparatus.

With reference to the twelfth aspect, in some implementations of the twelfth aspect, if the application currently displayed by the apparatus is a desktop application, the processing module is specifically configured to display the user interface of the application corresponding to the target icon in a full-screen window manner; or if the application currently displayed by the apparatus is a non-desktop application, the processing module is specifically configured to display the user interface of the application corresponding to the target icon in a floating window manner.

With reference to the twelfth aspect, in some implementations of the twelfth aspect, the first preset display manner is determined based on an on or off state of a first control switch, where the on state of the first control switch indicates to display, in a floating window, the user interface of the application corresponding to the target icon; and if the first control switch is on, the processing module is configured to display the user interface of the application corresponding to the target icon in a floating window manner.

With reference to the twelfth aspect, in some implementations of the twelfth aspect, the processing module is further configured to display the taskbar in a second preset display manner, where the second preset display manner includes fixed display or floating display, and the second preset display manner is determined based on a screen attribute of the apparatus.

With reference to the twelfth aspect, in some implementations of the twelfth aspect, if the screen attribute of the apparatus meets a first preset condition, the processing module is specifically configured to display the taskbar in a fixed display manner; or if the screen attribute of the apparatus meets a second preset condition, the processing module is specifically configured to display the taskbar in a floating display manner, where the first preset condition is different from the second preset condition.

With reference to the twelfth aspect, in some implementations of the twelfth aspect, the second preset display manner is determined based on an application currently displayed by the apparatus, and if the application currently displayed by the apparatus is a desktop application, the processing module is configured to display the taskbar in a fixed display manner; or if the application currently displayed by the apparatus is a non-desktop application, the processing module is configured to display the taskbar in a floating display manner.

With reference to the twelfth aspect, in some implementations of the twelfth aspect, the second preset display manner is determined based on an on or off state of a second control switch, where the on state of the second control switch indicates to display the taskbar in a fixed display manner, and if the second control switch is on, the processing module is configured to display the taskbar in the fixed display manner.

According to a thirteenth aspect, a computer program product is provided. The computer program product includes computer program code. When the computer program code is run on a computer, the method in the first aspect or any possible implementation of the first aspect is performed, or the method in the second aspect or any possible implementation of the second aspect is performed, or the method in the third aspect or any possible implementation of the third aspect is performed, or the method in the fourth aspect or any possible implementation of the fourth aspect is performed. According to a fourteenth aspect, a computer-readable storage medium is provided. The computer-readable storage medium stores computer program code. When the computer program code is run on a computer, the method in the first aspect or any possible implementation of the first aspect is performed, or the method in the second aspect or any possible implementation of the second aspect is performed, or the method in the third aspect or any possible implementation of the third aspect is performed, or the method in the fourth aspect or any possible implementation of the fourth aspect is performed.

According to a fifteenth aspect, a chip is provided, including a processor, configured to read instructions stored in a memory. When the processor executes the instructions, the chip is enabled to implement the method in the first aspect and any possible implementation of the first aspect, or the chip is enabled to implement the method in the second aspect and any possible implementation of the second aspect, or the chip is enabled to implement the method in the third aspect and any possible implementation of the third aspect, or the chip is enabled to implement the method in the fourth aspect and any possible implementation of the fourth aspect.

### BRIEF DESCRIPTION OF DRAWINGS

FIG. 1 is a diagram of a hardware architecture of an electronic device applicable to an embodiment of this application;
FIG. 2 is a diagram of a software architecture of an electronic device applicable to an embodiment of this application;
FIG. 3 to FIG. 36 are diagrams of user interfaces according to an embodiment of this application;
FIG. 37 is a diagram of an application management apparatus according to an embodiment of this application; and
FIG. 38 is a diagram of an electronic device according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. As used in the specification and the appended claims of this application, the singular expressions "one", "a/an", "said", "the foregoing", "the", and "this" are intended to include such expressions as "one or more", unless otherwise clearly indicated in the context. It should be further understood that in the following embodiments of this application, "at least one" and "one or more" mean one, two, or more. The term "and/or" is used for describing an association relationship between associated objects, and indicates that three relationships may exist. For example, A and/or B may indicate the following three conditions: Only A exists, both A and B exist, and only B exists, where A and B may be singular or plural. The character "/" generally indicates an "or" relationship between the associated objects.

Reference like "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", "in other embodiments", and the like that appear at different places in this specification do not necessarily mean referring to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

A method provided in embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

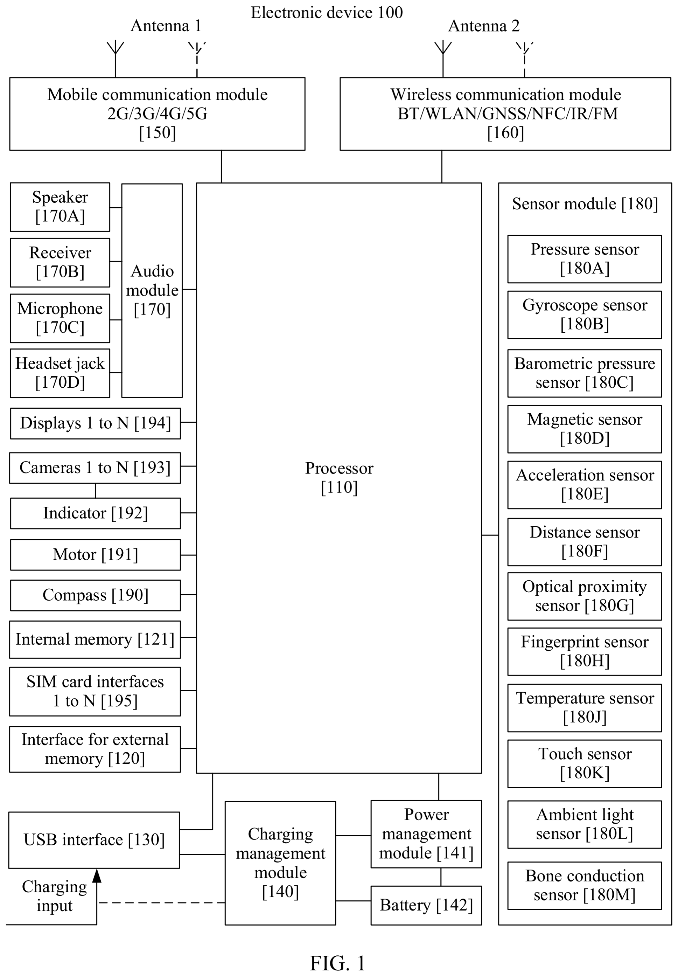

For example, FIG. 1 is a diagram of a structure of an electronic device 100. The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a neural center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just been used or cyclically used by the processor 110. If the processor 110 needs to use the instructions or the data again, the processor 110 may directly invoke the instructions or the data from the memory. This avoids repeated access, reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between modules shown in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 when charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert, through the antenna 2, the signal into an electromagnetic wave for radiation.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the camera 193, the ISP, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, simulates a biological neural network structure such as a transmission mode between neurons in a human brain to perform rapid processing on input information, and may further perform continuous self learning. Applications such as intelligent cognition of the electronic device 100 may be implemented through the NPU, for example, image recognition, facial recognition, speech recognition, and text understanding.

The interface for external memory 120 may be used to connect to an external storage card, for example, a micro SD card, to extend a storage capability of the electronic device 100. The external storage card communicates with the processor 110 through the interface for external memory 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various functional applications of the electronic device 100 and data processing. The internal memory 121 may include a program storage area and a data storage area. The program storage area may store an operating system, an application needed by at least one function (for example, a voice playing function or an image playing function), and the like. The data storage area may store data (for example, audio data, and a phone book) created in a process of using the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The button 190 includes a power button, a volume button, and the like. The button 190 may be a mechanical button, or may be a touch button. The electronic device 100 may receive a button input, and generate a button signal input related to a user setting and function control of the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

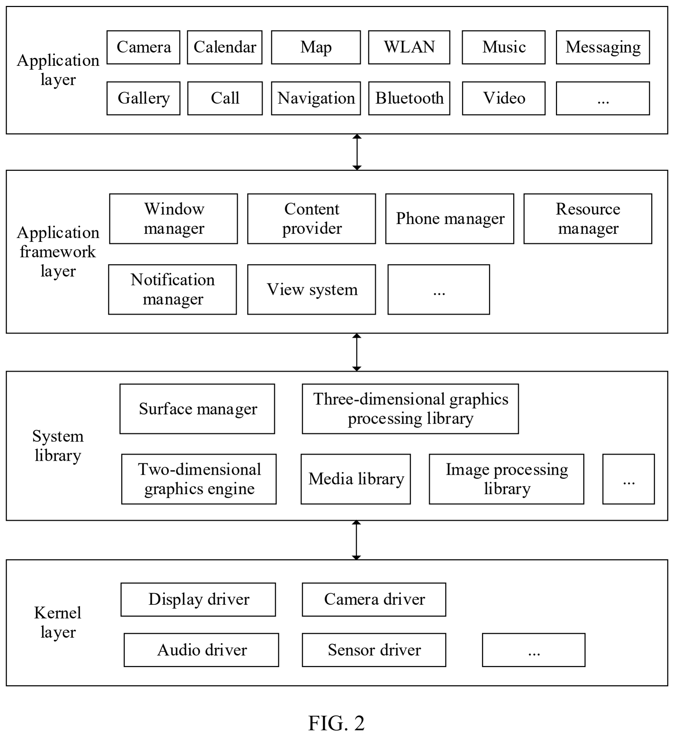

FIG. 2 is a block diagram of a software structure of the electronic device 100 according to an embodiment of this application. In a layered architecture, software is divided into several layers, and each layer has a clear role and task. Communication between layers is performed through software interfaces. In some embodiments, an Android system is divided into four layers: an application layer, an application framework layer, an Android runtime (Android runtime) and system library, and a kernel layer from top to bottom. The application layer may include a series of application packages.

As shown in FIG. 2, an application package may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include videos, images, audio, calls that are made and answered, browsing histories and bookmarks, phone books, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answer, hang-up, or the like).

The resource manager provides various resources for an application, such as a localized character string, an icon, an image, a layout file, and a video file.

The notification manager enables an application to display notification information in a status bar, and may be configured to convey a notification type message. The message may automatically disappear after a short stay without a user interaction. For example, the notification manager is configured to notify download completion, give a message notification, and the like. The notification manager may alternatively be a notification that appears in a top status bar of the system in a form of a graph or a scroll bar text, for example, a notification of an application running in the background, or may be a notification that appears on the screen in a form of a dialog window. For example, text information is prompted in the status bar, an alert tone is made, the electronic device vibrates, or an indicator light blinks.

The Android runtime includes a core library and a virtual machine. The Android runtime is responsible for scheduling and management of the Android system.

The core library includes two parts: One part is a function that needs to be invoked by Java language, and the other part is a core library of Android.

The application layer and the application framework layer run in the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

Before the embodiments of this application are described, definitions of some terms that may be used in the following embodiments are first explained and described.

Icon (icon): In a broad sense, icons refer to all signs with indicative functions. In Chinese, icons usually refer to icons, on a desktop of a computer screen, indicating a user to perform various operations and are important auxiliary for character display. The icons may be divided into a plurality of types, for example, identification of a file type (document icons), and corresponding specific icons are displayed according to extension names respectively. Application icon (application icon): When applications are made, most of the applications may include icons that are sufficient for application identification. Operations in the application such as icon buttons on a toolbar (toolbar icons) and icons on a menu (menu icons), and in a broad sense, a video play window, a video play card, an application plugin, an application card, and the like may all be considered as icons.

Virtual machine (virtual machine): In an architecture of computer science, a virtual machine is a type of special software that can establish an environment between a computer platform and a terminal user. The terminal user operates other software based on the environment established by the virtual machine.

Applet: An applet is an application that can be used without downloading and installing. An applet platform may be configured to provide a way for a user to obtain an applet. There are a plurality of types of existing applets, including a WeChat applet, an Alipay applet, a Baidu Smart applet, a Jinri Toutiao applet, and the like.

Quick application: A quick application can be developed using a front-end technology stack and native rendering. The quick application has advantages of both an HTML page and a native application. A user can access and use the application instantly without downloading and installing, and can enjoy performance experience of the native application.

Application plugin: An application plugin, also referred to as a desktop widget, is a program that can be directly displayed on a system desktop, and can receive periodic updates. A working principle of the application plugin is a method of embedding a control of a process into a window of another process.

Application card: An application card, also referred to as a service card or a card, is an interface display form of an application service. Important information or operations of the application service are surfaced on the application card to achieve direct service access, thereby reducing experience levels. The application card can be embedded into another application and displayed as a part of an interface of the another application and support basic interaction functions such as page launching and message sending.

Taskbar: A taskbar is a tool on a desktop for starting and managing an application. The taskbar may also be referred to as a dock bar.

Full-screen window: A full-screen window refers to a window that covers or occupies an entire screen, or may refer to a window that covers an entire desktop application.

Split-screen window: A screen of an electronic device is divided into a plurality of adjacent areas, and split-screen windows fully cover the corresponding areas. The electronic device may support a plurality of types of split-screen windows, for example, dual-split-screen window and triple-split-screen window.

Floating window: A floating window is a window displayed on a user interface of an application in a floating manner. A floating icon may also be considered as a floating window.

Recent task list: A recent task list may also be referred to as a recent task or a recently used application, and includes an activity and a task that are recently accessed by a user within preset duration.

Application instance (instance): In a computer system, when a new object that is based on a model is created at any time, it can be said that the model is instantiated. This instantiation usually has a common data structure with other instances that are based on the same model, but values stored in the instance are independent. In this way, changing a value in an instance does not interfere with a value in another instance. In object-oriented programming, an instance is a concrete implementation of any object, and creating an instance is called instantiation. In class-based programming, an object is an instance of a class.

Application program (application program): An application program, briefly referred to as an application (application or app), is a primary category of software, and is a program written to fulfill specific user-oriented application purpose. An application installed locally on an electronic device, an applet that does not need to be downloaded and installed, a quick application, and the like may all be referred to as an application. A same application may have different application functions.

Unless otherwise specified, in embodiments of this application, an application, an applet, a quick application, and an application function of an application may not be distinguished and are all referred to as an application. The application may have an icon, or may have a user interface.

As an important entrance for human-computer interaction, a screen of an electronic device may be used to display information, and in addition, a user may perform an input operation by tapping different areas of the screen. Because a display area of a screen of an electronic device is limited, designing a proper display manner of information or a function entry, improving screen utilization efficiency of the electronic device, and improving use experience of a user is a long-term objective of a person skilled in the software field.

The taskbar or the dock bar is a window that provides an entry to a commonly used application or a recommended function for the user. The taskbar may be fixedly displayed on the screen of the electronic device, and occupies a part of a display area of the screen of the electronic device for a long time. It is worth considering improving a function of the taskbar to improve utilization efficiency of the screen of the electronic device.

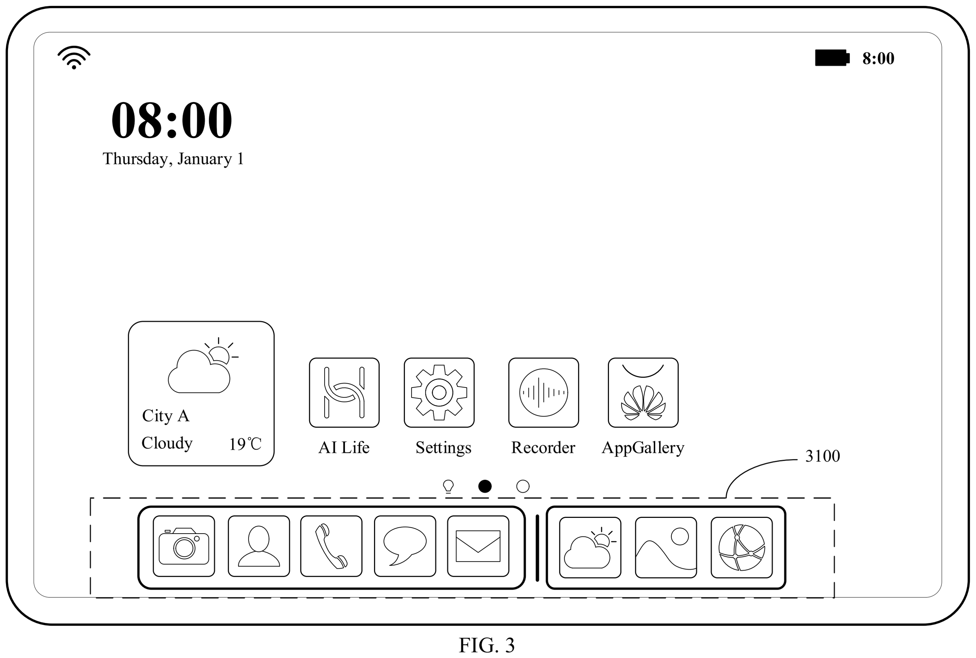

To improve a method of managing an application via a taskbar, this application provides an application management method. In the following embodiments, a display manner of the taskbar, an interaction manner of the taskbar, a function of the taskbar, and the like are separately described. FIG. 3 shows a display manner of a taskbar 3100 in a "desktop" (launcher) application. The taskbar 3100 may be fixedly displayed in a display area of a screen of an electronic device. For example, the taskbar 3100 may be displayed on any edge of four edges of the screen of the electronic device. In FIG. 3, the taskbar 3100 is fixedly displayed on a lower edge of the screen of the electronic device, or the taskbar 3100 may be fixedly displayed on an upper edge, a left edge, a right edge, or the like of the screen of the electronic device.

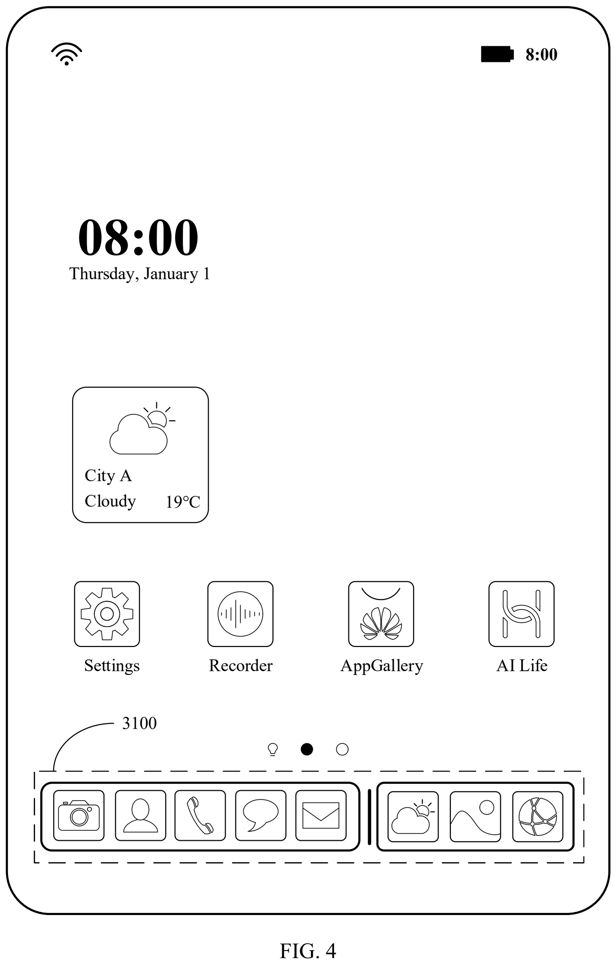

It should be noted that the upper, lower, left, and right herein belong to relative concepts. The lower edge is opposite to the upper edge, and the right edge is opposite to the left edge. The electronic device may determine a direction based on a sensor carried by the electronic device. For example, in some cases, it may be determined by using a gravity sensor that a screen direction consistent with a gravity acceleration direction is determined as an up-down direction, and a screen direction perpendicular to the gravity acceleration is determined as a left-right direction. The electronic device shown in FIG. 3 is rotated clockwise by 90 degrees to a state shown in FIG. 4, and a position of the taskbar 3100 may be correspondingly changed. In the state shown in FIG. 4, the taskbar 3100 may still be displayed at a position of any edge of the four edges of the screen of the electronic device.

In the following embodiments, an example in which the electronic device is in a state shown in FIG. 3 and the taskbar 3100 is displayed at a position shown in FIG. 3 is used for description. For another state of the electronic device and a case in which the taskbar 3100 is on another edge, execution may be performed with reference to this.

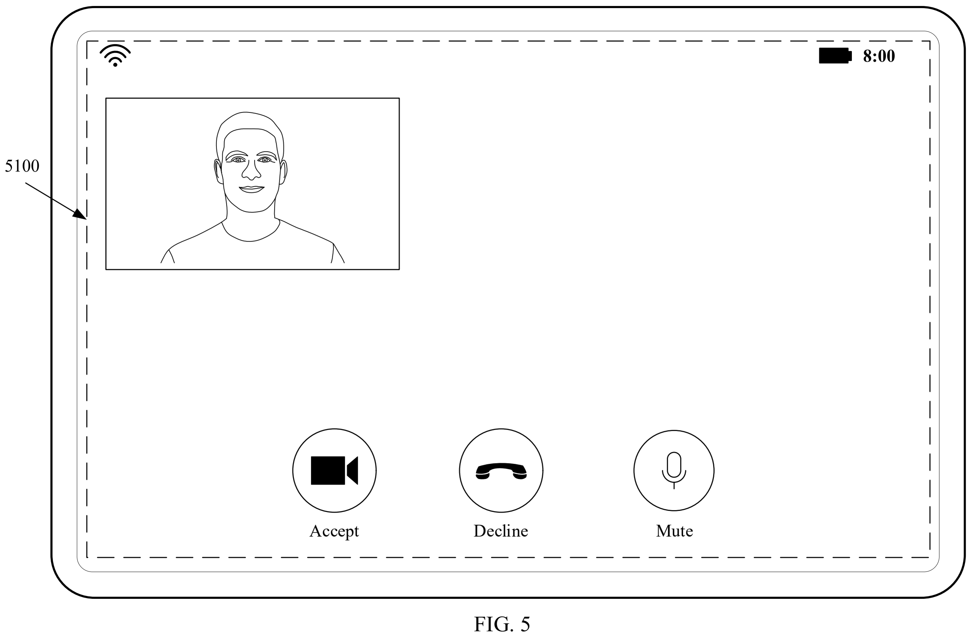

FIG. 5 shows a display manner of the taskbar 3100. A first application is different from the "desktop" application in FIG. 1, and the first application is displayed in a full-screen window manner (that is, a window used to display a user interface of the first application fully covers the screen of the electronic device), and the taskbar 3100 is not displayed on the screen of the electronic device in a full-screen display state of the first application. In other words, an interface 5100 of the first application displayed in full screen does not include a display area of the taskbar 3100.

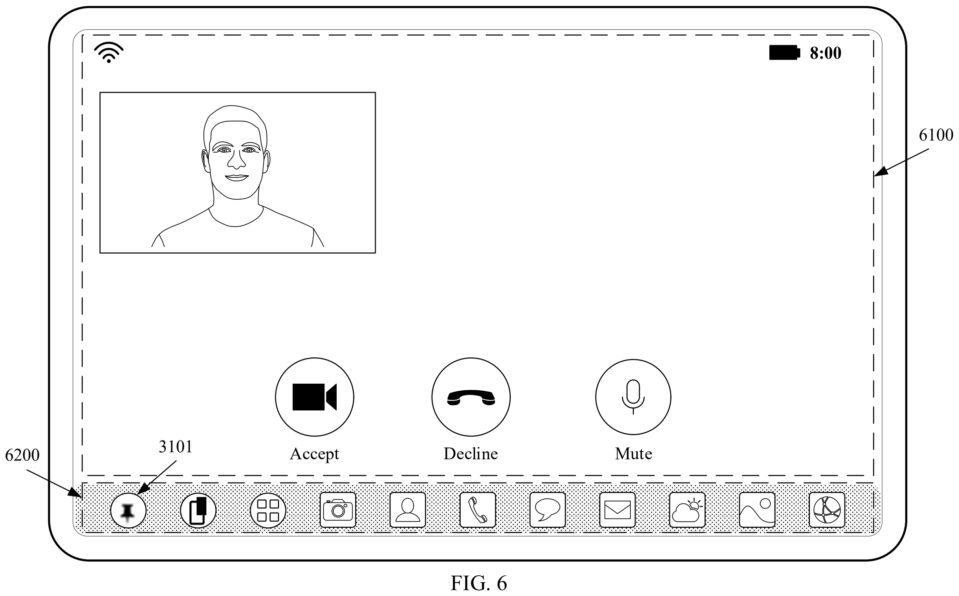

FIG. 6 shows another display manner of the taskbar 3100. The screen of the electronic device may include a display area A 6100 and a display area B 6200. The display area A 6100 is used to display the first application, and the display area B 6200 is used to display the taskbar 3100. The first application is displayed in a manner in which the display area A 6100 is fully covered. This display manner may still be referred to as full-screen display of the first application. The display area A 6100 and the display area B 6200 may form an upper area and a lower area, or may form a left area and a right area.

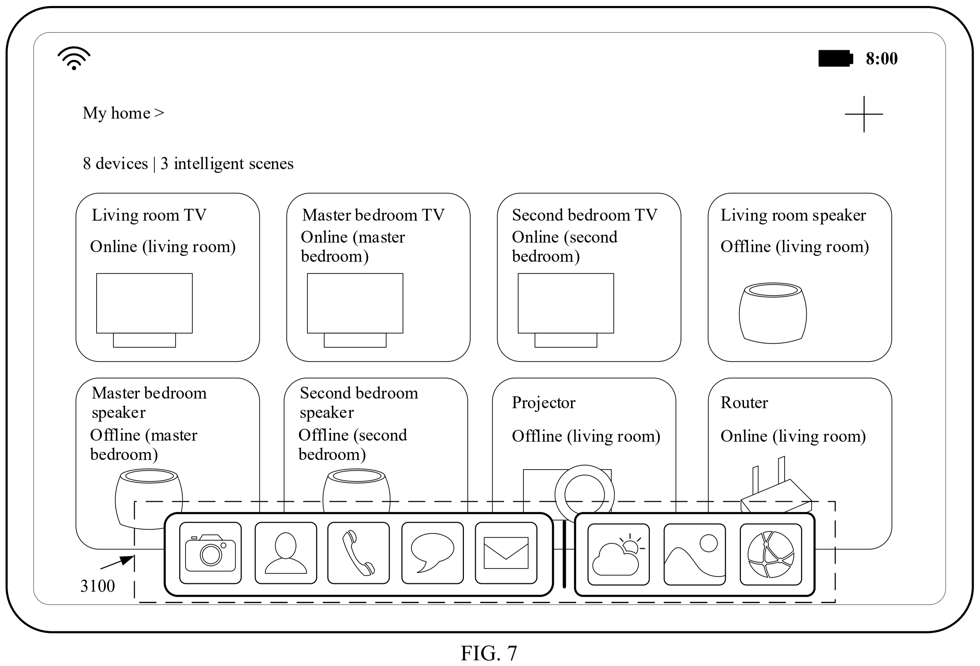

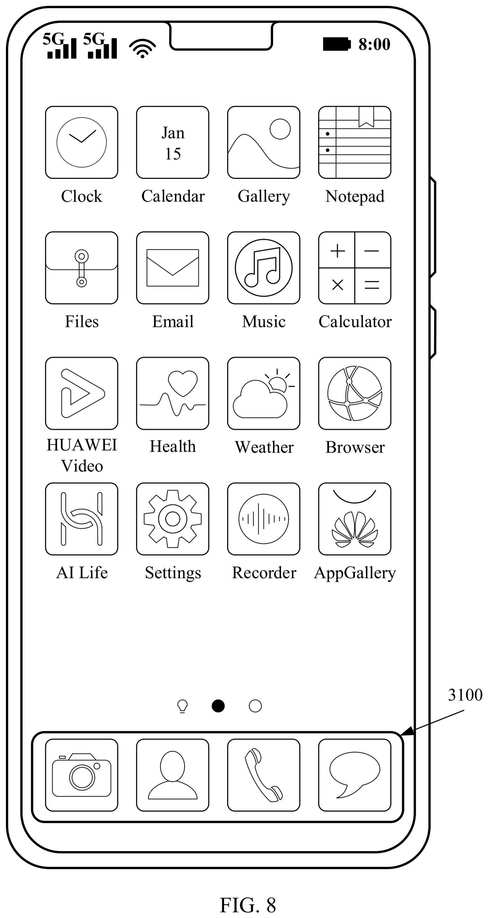

FIG. 7 shows still another display manner of the taskbar 3100. A second application in FIG. 7 is displayed in a full-screen window manner, and the second application is different from the "desktop" application in FIG. 3. The taskbar 3100 is hidden by default when the second application is in a full-screen display state, and a user may switch the taskbar 3100 from the "hidden" state to a "floating" state in FIG. 7 in a plurality of manners. Alternatively, the taskbar 3100 may be displayed below the second application (corresponding to a "hidden" display state), or the taskbar 3100 may be displayed above the second application (corresponding to a "floating" display state). For different types of electronic devices, the taskbar 3100 may be configured to be in different display manners. Different from the foregoing first electronic device, FIG. 8 to FIG. 10 show display manners of the taskbar 3100 on a second electronic device.

A difference between the first electronic device and the second electronic device is first briefly described herein. The first electronic device may be an electronic device with a relatively large screen size, for example, a screen size of the first electronic device is 10 inches. Correspondingly, the second electronic device may be an electronic device with a relatively small screen size, for example, a screen size of the second electronic device is 6 inches. For another example, screen resolution of the first electronic device is within a first preset range, and screen resolution of the second electronic device is within a second preset range. A display manner of the taskbar may be set based on a hardware attribute of the electronic device before delivery of the electronic device.

FIG. 8 shows a display manner of a "desktop" application of a taskbar 3100 on the second electronic device. Similar to a display manner of the "desktop" application on the first electronic device, the taskbar 3100 may be fixedly displayed on any edge of four edges of a screen of the second electronic device. In FIG. 8, the taskbar 3100 is fixedly displayed on a lower edge of the screen of the second electronic device, or the taskbar 3100 may be fixedly displayed on an upper edge, a left edge, a right edge, or the like of the screen of the second electronic device.

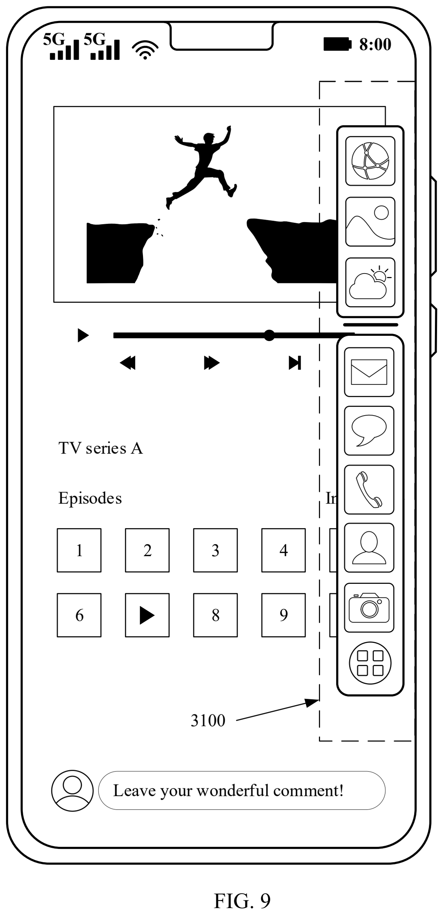

FIG. 9 shows another display manner of the taskbar 3100 on the second electronic device. A third application in FIG. 9 is displayed in a full-screen window manner, and the third application is different from the "desktop" application in FIG. 8. The taskbar 3100 may be hidden by default when the third application is a full-screen display state, and a user may switch the taskbar 3100 from the "hidden" state to a "floating" state in FIG. 9 in a plurality of manners. Alternatively, the taskbar 3100 may be displayed below the third application (corresponding to a "hidden" display state), or the taskbar 3100 may be displayed above the third application (corresponding to a "floating" display state).

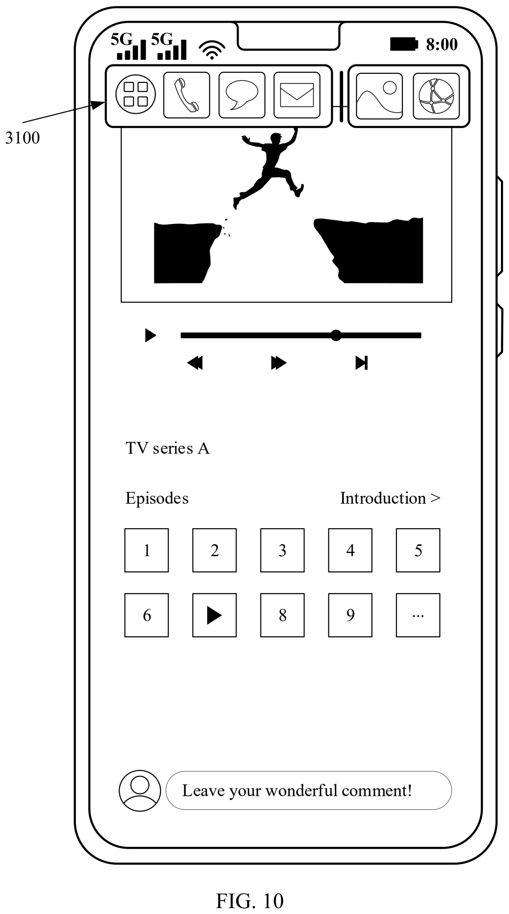

The taskbar 3100 in the "floating" state may also be "floating" on any edge of the four edges of the second electronic device. For example, in FIG. 9, the taskbar 3100 may be considered as "floating" on the right edge of the second electronic device, and in FIG. 10, the taskbar 3100 may be considered as "floating" on the upper edge of the second electronic device.

The user may switch between different display manners of the taskbar 3100 in a plurality of manners. This part of content is described in detail in the following part of a function of the taskbar, and is not described herein.

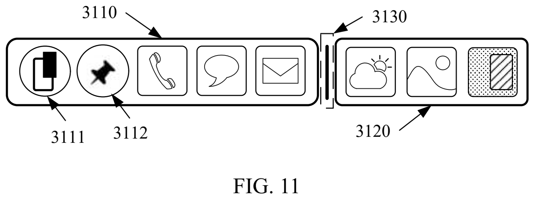

FIG. 11 shows a taskbar 3100. The taskbar 3100 includes a first functional component 3110 and a second functional component 3120. The first functional component 3110 may also be referred to as a resident functional component 3110. The functional component may be configured to display an entry of one or more applications (or functions) pinned to the first functional component 3110. The second functional component 3120 may also be referred to as a recommendation functional component 3120, and the functional component may be configured to display an entry of one or more recommended applications (or functions).

The taskbar 3100 may further include a third functional component 3130. The third functional component 3130 may be located between the first functional component 3110 and the second functional component 3120. The third functional component 3130 may be configured to separate the first functional component 3110 from the second functional component 3120.

In another possible implementation, the taskbar 3100 may be considered as a functional component as a whole. In this case, the taskbar 3100 may include a first display area 3110 and a second display area 3120. The first display area 3110 corresponds to the first functional component 3110, the second display area 3120 corresponds to the second functional component 3120, and the first display area 3110 and the second display area 3120 are separated by a separator (a separator bar) 3130.

It should be noted that, both the foregoing two implementations may be used to implement related functions of the taskbar 3100 in the following embodiments. For brevity, the taskbar 3100 is considered as a functional component for description in the following embodiments.

A plurality of icons may be displayed in the first display area 3110, and the plurality of icons may be icons of applications or icons of application functions. For example, the plurality of icons may be applet icons, quick application icons, application plugin icons, or video play icons. The plurality of icons may be displayed in an arrangement manner of one row, one column, a plurality of rows, or a plurality of columns, and shapes of the plurality of icons may be circles, rounded rectangles, squares, rectangles, or the like. When the shapes of the plurality of icons are rounded rectangles, width-to-height ratios of the plurality of icons may be 1:1, 1:2, 2:1, or the like. A shape and a size of an application icon displayed on the taskbar 3100 are not limited in this application.

The user may adjust a display position of the icon in the first display area 3110 by dragging any icon in the first display area 3110. For a newly added icon in the first display area 3110, the newly added icon may be displayed at an end that is of the first display area and that is close to the second display area 3120.

In some examples, the applet icon and the quick application icon may be referred to as first-type icons, and the application plugin icon and the video play icon may be referred to as second-type icons. The first-type icon and the second-type icon may have different shapes, sizes, and the like. For example, a width-to-height ratio of the first-type icon is 1:1, and a width-to-height ratio of the second-type icon is 2:1.

The plurality of icons may be entries of applications, or may be entries of functions included in an application. In other words, when the user taps an icon in the first display area 3110, in response to the operation of the user, the electronic device may open a main interface of an application corresponding to the icon. Alternatively, in response to the operation of the user, the electronic device may open an interface of a function of an application corresponding to the icon.

Herein, the application corresponding to the icon may be an application (or referred to as a system application) built in a system of the electronic device, for example, a "phone" application, a "mail" application, or the like. The application corresponding to the icon may also be an application (or referred to as a user application) installed by the user, for example, a "QQ" application, a "WeChat" application, or the like. The application function corresponding to the icon may be a function of the foregoing system application, for example, turning on/off a Bluetooth switch. The application function corresponding to the icon may also be a function included in the foregoing user application, for example, an applet included in the "WeChat" application. In other words, when the user taps an icon in the first display area 3100, the electronic device may open a user interface of the "Phone" application, or the electronic device may open a user interface of an "applet" of "WeChat".

By tapping an icon in the first display area 3110, the user may further open running states of at least two applications.

In some examples, an application A and an application B are displayed in two windows in a split-screen window manner. In response to an operation of the user tapping a target icon, the electronic device may restore, on the screen, a state in which the application A and the application B are displayed in split-screen windows.

In some other examples, an application A and an application B are displayed in two windows in a split-screen window manner, and an application C is displayed in a floating window. In response to an operation of the user tapping a target icon, the electronic device may restore, on the screen, a state in which the application A and the application B are displayed in split screen windows and the application C is displayed in the floating window.

In some other examples, an application A is displayed in a full-screen window, and an application B is displayed in a floating window. In response to an operation of the user tapping a target icon, the electronic device may restore, on the screen, a state in which the application A is displayed in the full-screen window and the application B is displayed in the floating window.

In some other examples, an application A, an application B, and an application C all run in the background. In response to an operation of the user tapping a target icon, the electronic device may display, on the screen, states of the application A, the application B, and the application C that run in the background. The user may further tap any application running in the background, to switch the application running in the background to running in the foreground.

When the first display area 3110 includes a plurality of icons, and an area displayed in the first display area 3110 cannot completely display all the icons, the user may perform left or right sliding in the first display area 3110, to switch an icon that is not displayed currently to a visible state. Alternatively, the user may drag an icon that is not displayed currently to an area that can display an icon. In other words, content displayed in the first display area 3110 may be scrolled, and each icon displayed in the first display area 3110 may also be dragged separately.

The user may pin the foregoing icons to the first display area 3110 in a plurality of manners.

In some examples, the electronic device currently displays a user interface of a target application, and the user interface of the target application includes a reference icon. The user may drag the reference icon on the user interface of the target application to the first display area 3110, so that a target icon may be displayed in the first display area 3110, and the target icon corresponds to the reference icon.

For example, the electronic device currently displays a user interface of an application such as "WeChat", "QQ", or "Alipay". The user interface of the application includes an icon of at least one "applet". The user may drag the icon of the "applet" on the current user interface to the first display area 3110 of the taskbar 3100, and the first display area 3110 may correspondingly display the icon of the "applet". In other words, in this case, the target application may be an application that supports an "applet" or a "quick app" function, such as "WeChat", "QQ", or "Alipay". The reference icon may be an icon of an "applet" or a "quick app" displayed on these target applications. The target icon may be an icon that corresponds to the "applet" or the "quick app" and that is displayed in the first display area 3110 after a user operation. Herein, a shape and a size of the target icon may be consistent with those of the reference icon. For example, the shape is a circle. For another example, the electronic device currently displays a user interface of a "desktop" application, and at least one application plugin is displayed on the user interface of the application. The user may drag the application plugin to the first display area 3110, and an icon corresponding to the application plugin may be correspondingly displayed in the first display area 3110. In this case, the target application may be an application that has a plugin (for example, a "weather" plugin or a "music" play plugin) displayed on a user interface, such as a "desktop" application or an "application drawer" application. The reference icon may be an icon corresponding to the plugin, and the target icon may be an icon that corresponds to the plugin and that is displayed in the first display area 3110. Herein, the target icon and the reference icon may have different shapes and sizes. For example, the reference icon is a rounded rectangle with a width-to-height ratio of 1:1, and the target icon is a rounded rectangle with a width-to-height ratio of 2:1.

For another example, the electronic device currently displays a user interface of a "video" application, and at least one video play icon (or a control or a window) is displayed on the user interface of the application. The user may drag the video play icon to the first display area 3110, and an icon corresponding to the video play icon may be correspondingly displayed in the first display area 3110. In this case, the target application may be an application including the at least one video play icon, the reference icon may be the foregoing video play icon, and the target icon may be an icon that corresponds to the foregoing video play icon and that is displayed in the first display area 3110. Herein, the target icon and the reference icon may have different shapes and sizes. For example, the reference icon is a right-angled rectangle with a width-to-height ratio of 3:2, and the target icon is a rounded rectangle with a width-to-height ratio of 2:1.

The foregoing reference icon may come from any user interface including the reference icon on the electronic device, provided that the reference icon on the user interface can be dragged and a corresponding application or application function can be opened through the icon.

For example, the icon of the "mail" application may be located on a display interface of the "desktop" application, or the icon of the "mail" application may be located on a display interface of the "application drawer" application, or the icon of the "mail" application may be located in the second display area 3120.

Similarly, for example, an icon of an applet of "WeChat" may be located on a program interface of "WeChat", or an icon of an applet of "WeChat" may be located on a display interface of the "desktop" application, or an icon of an applet of "WeChat" may be located in the second display area 3120, or an icon of an applet of "WeChat" may be an icon on a display interface of "WeChat" installed on a virtual machine running on a current electronic device.

Still for example, the video play icon may be a picture displayed on a play control displayed on an interface of the "desktop" application, or the video play icon may be a picture displayed on a play control on an interface of the "video" application, or the video play icon may be a full-screen play picture below a movie play interface, or the video play icon may be located in the second display area 3120.

The foregoing reference icon may be an icon located on an electronic device, or on a basis that a current electronic device establishes a communication connection to another electronic device, the foregoing reference icon may alternatively be from the another electronic device. In other words, an application corresponding to the reference icon may be an application installed locally on the current electronic device, and an application function corresponding to the reference icon may be an application function supported by an application installed locally on the current electronic device. Alternatively, an application corresponding to the reference icon may be an application that is not installed locally on the current electronic device, and an application function corresponding to the reference icon may alternatively be an application function supported by an application that is not installed locally on the current electronic device.

The foregoing describes a related function of the first display area 3110 of the taskbar 3100, and the following describes a function of the second display area 3120 of the taskbar 3100.

The second display area 3120 and the first display area 3110 may be located in a same row or a same column. In other words, the second display area 3120 and the first display area 3110 form a layout of "one on the left and the other on the right" or "one above the other". The second display area 3120 and the first display area 3110 may communicate with each other. In other words, the first display area 3110 and the second display area 3120 may form a display window. Alternatively, the second display area 3120 and the first display area 3110 may not communicate with each other. In other words, the first display area 3110 is located in a first window, and the second display area 3120 is located in a second window.

The second display area 3120 may be used to display one or more recommended icons. The user may drag the foregoing recommended icon from the second display area 3120 to the first display area 3110, to fixedly display the recommended icon on the taskbar 3100, that is, to convert the recommended icon into a target icon.

The recommended icon may be an icon of an application, or may be an icon of an application function included in an application. The recommended application may be a system application or a user application. The recommended application function may be a function included in a system application, or may be a function included in a user application. For example, the recommended application may be the "mail" application, and the recommended application function may also be the "QQ" application. The recommended application function may be turning on/off a Bluetooth switch, or the recommended application function may be an applet of "WeChat", or the recommended application function may be an entry for playing a video or audio such as a movie, a TV series, or music.

The foregoing recommended icon may alternatively indicate to save a multi-window combination display manner displayed by the electronic device.

In some examples, the screen of the electronic device currently displays user interfaces of two applications, the two applications are displayed in a split-screen window manner, and the recommended icon may indicate to save a combination display manner of split-screen windows of the two applications.

In some other examples, the screen of the electronic device currently displays user interfaces of three applications. An application A and an application B are displayed in a split-screen window manner, an application C is displayed in a floating window manner, and the recommended icon may indicate to save a combination display manner of split-screen window display of the application A and the application B and floating window display of the application C.

In some other examples, the screen of the electronic device currently displays user interfaces of two applications. An application A is displayed in a full-screen window manner, an application B is displayed in a floating window manner, and the recommended icon may indicate to save a combination display manner of full-screen window display of the application A and floating window display of the application B.

The foregoing recommended icon may further indicate a recent task list of the electronic device. In this case, the recommended icon may also be referred to as a target folder or a recommended folder.

In a possible implementation, the target folder may include at least one task icon, and the task icon indicates a task in the recent task list. The user can manage recent tasks by operating the target folder.

The recommended icon displayed in the second display area 3120 may be an icon located on a same electronic device, or on a basis that a current electronic device establishes a communication connection to another electronic device, the foregoing recommended icon may alternatively be from the another electronic device. In other words, an application corresponding to the recommended icon may be an application installed locally on the current electronic device, and an application function corresponding to the recommended icon may be an application function supported by an application installed locally on the current electronic device. Alternatively, an application corresponding to the recommended icon may be an application that is not installed locally on the current electronic device, and an application function corresponding to the recommended icon may alternatively be an application function supported by an application that is not installed locally on the current electronic device.

The electronic device may display different recommended icons in the second display area 3120 based on a status of the user using an application on the electronic device. The electronic device may further display different recommended icons in the second display area 3120 based on information about a scenario in which the user currently uses the electronic device. The electronic device may further display different recommended icons in the second display area 3120 based on information about a user who uses the electronic device.

In other words, the electronic device may provide a recommended application or application function based on one or more of the following: historical information, scenario information, user information, or the like. The historical information may indicate a history of the user using the electronic device, for example, a user A opens a "music" application at 9 p.m. The scenario information may indicate a scenario in which the user uses the electronic device. For example, the scenario information may indicate a real scenario (such as a time and a place) in which the user uses the electronic device, or the scenario information may indicate an application scenario in which the user uses the electronic device (for example, the user sets the electronic device to a silent mode). The user information may indicate an identity (such as an age or a gender) of a user of the electronic device.

The foregoing historical information, scenario information, and user information may be associated with each other, so that the electronic device may also display different recommended icons in the second display area 3120 based on two or more pieces of the information.

The following further describes a function of the taskbar 3100 with reference to a specific application scenario. In the following embodiment, the function of the taskbar 3100 is described mainly by using the foregoing first electronic device. A function of the taskbar 3100 on the foregoing second electronic device is similar to a function of the taskbar 3100 on the first electronic device, and may be performed with reference to content in the following embodiment.

The electronic device may open, in different opening manners, an application corresponding to an icon on the taskbar 3100. The opening manner herein includes any one of the following: a full-screen window, a split-screen window, and a floating window. The opening manner may be determined based on an application scenario and a user setting.

In some examples, it may be set by default for the electronic device: In a scenario of a "desktop" application, when the user taps an icon on the taskbar 3100, the electronic device opens a corresponding application in a full-screen window manner. In a scenario of a non-"desktop" application, when the user taps an icon on the taskbar 3100, the electronic device opens a corresponding application in a floating window display manner.

In some other examples, based on the foregoing default setting, the user may adjust a manner in which the electronic device opens an application corresponding to an icon on the taskbar 3100. For example, a window display mode icon 3111 (as shown in FIG. 11) is pinned to the first display area 3110. In response to an operation of the user tapping the window display mode icon 3111, it may be set for the electronic device that an application corresponding to an icon on the taskbar 3100 is always opened in a window display manner. In response to an operation of the user tapping the window display mode icon 3111 again, the electronic device may restore the opened application corresponding to the icon on the taskbar 3100 to a default setting. The window display mode icon 3111 may also be referred to as a first target icon 3111.

The window display mode icon 3111 may be pinned to the first display area 3110 by default before delivery of the electronic device, or the window display mode icon 3111 may be manually pinned to the first display area 3110 by the user in a use process. For example, the electronic device may display the window display mode icon 3111 in the second display area 3120, and in response to an operation of the user dragging the window display mode icon 3111 located in the second display area 3120 to the first display area 3110, the electronic device fixedly displays the window display mode icon 3111 in the first display area 3110 (setting of a position of a pinned icon in the first display area).

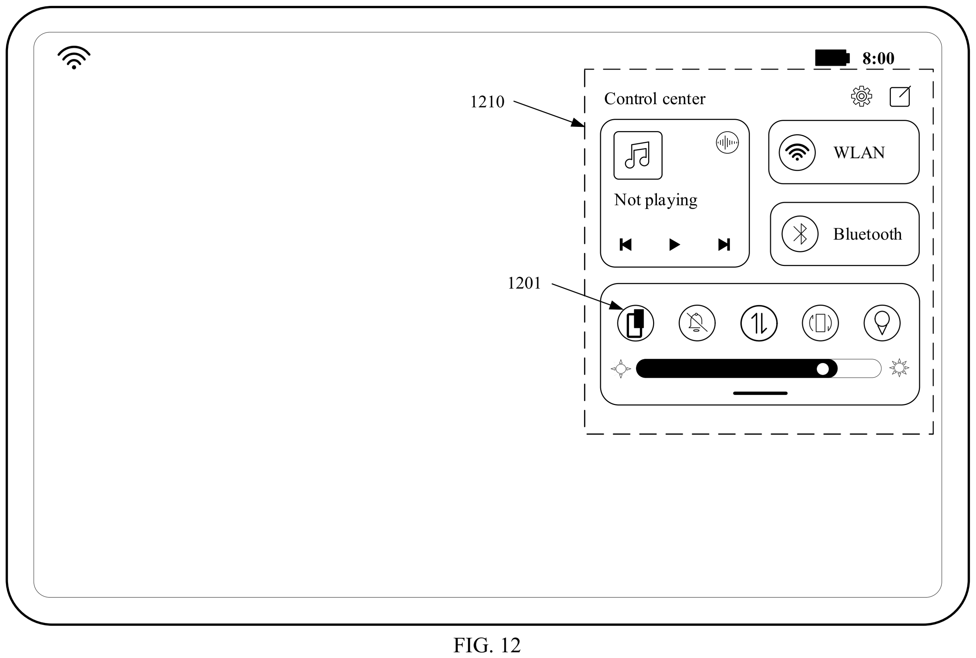

The window display mode icon 3111 may be further disposed in a control center 1210 shown in FIG. 12. For example, a shortcut switch 1201 may be set in the control center 1210, and a function of the shortcut switch 1201 is consistent with a function indicated by the window display mode icon 3111 in FIG. 11. In response to an operation of the user tapping the shortcut switch 1201, it may be set for the electronic device that an application corresponding to an icon on the taskbar 3100 is always opened in a window display manner. In response to an operation of the user tapping the shortcut switch 1201 again, the electronic device may restore the opened application corresponding to the icon on the taskbar 3100 to a default setting.

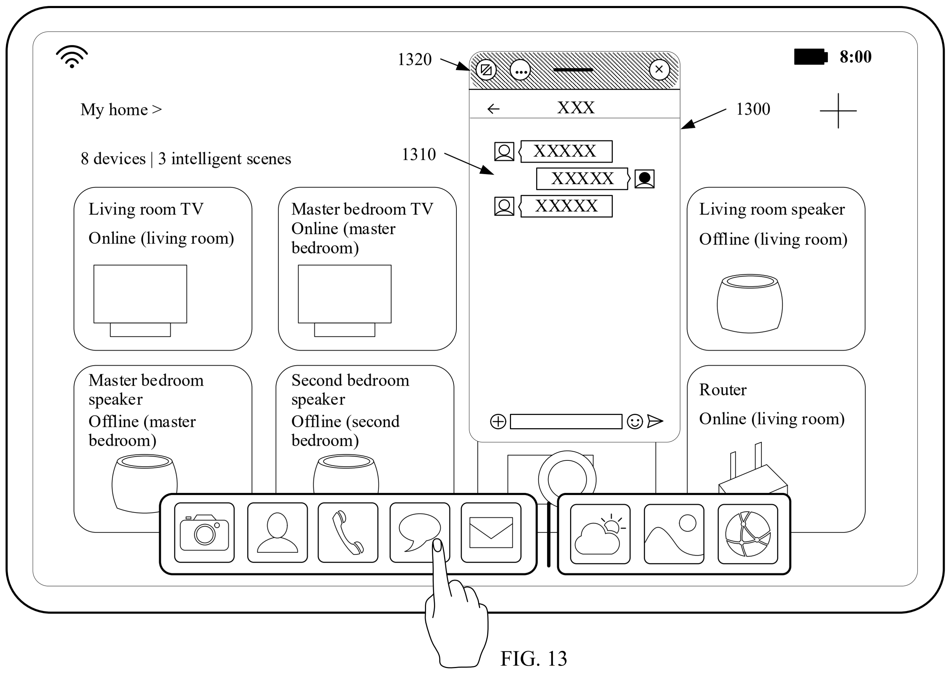

FIG. 13 shows an example of a method of opening, by an electronic device, an application corresponding to an icon on a taskbar in a default setting state (to be specific, an application corresponding to an icon on the taskbar 3100 in the scenario of the "desktop" application is opened in a full-screen display manner, and an application corresponding to an icon on the taskbar 3100 in the scenario of the non-"desktop" application is opened in a floating window display manner) or in a case that the user enables a window display mode.

The second application is opened in a full-screen window display manner. When the user taps an icon of a "messaging" application on the taskbar 3100 in this scenario, the electronic device may open the "messaging" application in a floating window manner, that is, open a third window 1300 on a user interface shown in FIG. 13. The third window 1300 may include a display area of an interface displaying the "messaging" application.

A default display manner may be set for the taskbar 3100. For example, a default display manner of the taskbar 3100 on the first electronic device is: always displayed in a "desktop" application, and always hidden in a non-"desktop" application. The user may also set a display manner of the taskbar 3100 on a basis of the default display manner.

For example, a "pin taskbar" function icon 3112 may be disposed in the first display area 3110, and the "pin taskbar" function icon may also be referred to as a second target icon 3112. In response to an operation of the user tapping the "pin taskbar" function icon 3112, the electronic device may set the taskbar 3100 to be always displayed in all applications. In other words, regardless of whether the electronic device currently displays a "desktop" application or a non-"desktop" application, the taskbar 3100 is displayed on the screen of the electronic device (that is, the state shown in FIG. 6 above). In response to an operation of the user tapping the "pin taskbar" function icon 3112 again, the electronic device may switch "always display taskbar" to the default display manner.

The electronic device may further be configured with a "taskbar display manner" setting option, and the user may change the display manner of the taskbar 3100 by changing the setting option. For example, the setting option may include a plurality of display options such as "default manner", "pinned display", and "floating display". "Default manner" may indicate that the display manner of the taskbar is: always displayed in a "desktop" application, and always hidden in a non-"desktop" application. "Fixed display" may indicate that the taskbar is always displayed, that is, the electronic device displays the taskbar regardless of whether a current application is a "desktop" application or a non-"desktop" application. "Floating display" may indicate that if the user does not operate the taskbar within a preset time length, the taskbar is automatically hidden, and the user may display the taskbar by using a plurality of trigger mechanisms when the taskbar is in a hidden state. For example, the user may slide from an edge of the screen to a center of the screen in a display area of the taskbar in a non-hidden state, to display the taskbar. For another example, the user may drag an icon to a display area of the taskbar in a non-hidden state, and in response to the operation of the user, the electronic device may display the taskbar.

For a display manner of the taskbar 3100 on the foregoing second electronic device, a default display manner may also be set for the taskbar 3100 of the second electronic device. For example, a default display manner of the taskbar 3100 on the second electronic device is: always displayed in a "desktop" application, and displayed in a floating manner in a non-"desktop" application. In other words, when the second electronic device displays the "desktop" application, the taskbar 3100 is always displayed on the screen of the second electronic device. When the second electronic device displays the non-"desktop" application, the taskbar 3100 may be hidden by default, and the user may switch the taskbar in the "hidden" state to a "displayed" state by using a plurality of trigger mechanisms. On a basis of the default display manner, the user may also adjust the display manner of the taskbar 3100 by changing a setting option displayed on the taskbar.

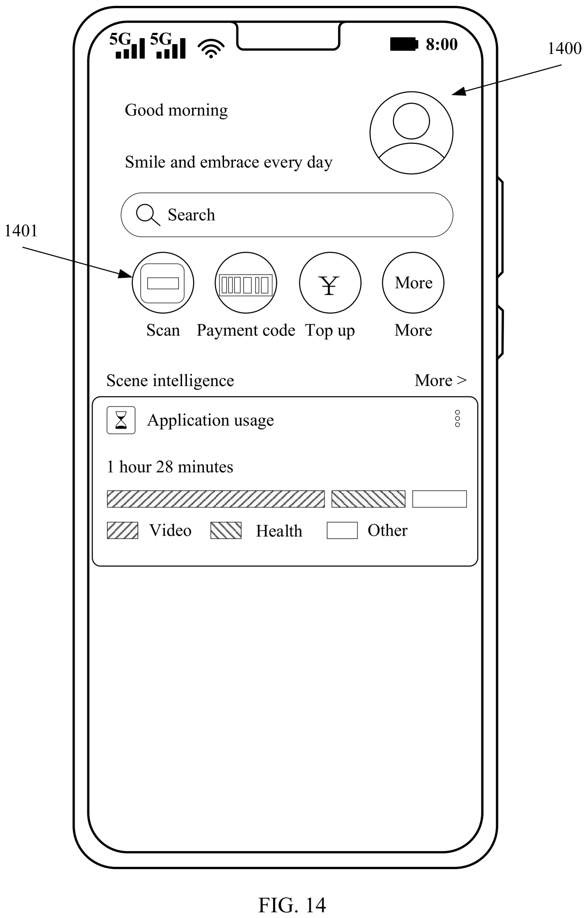

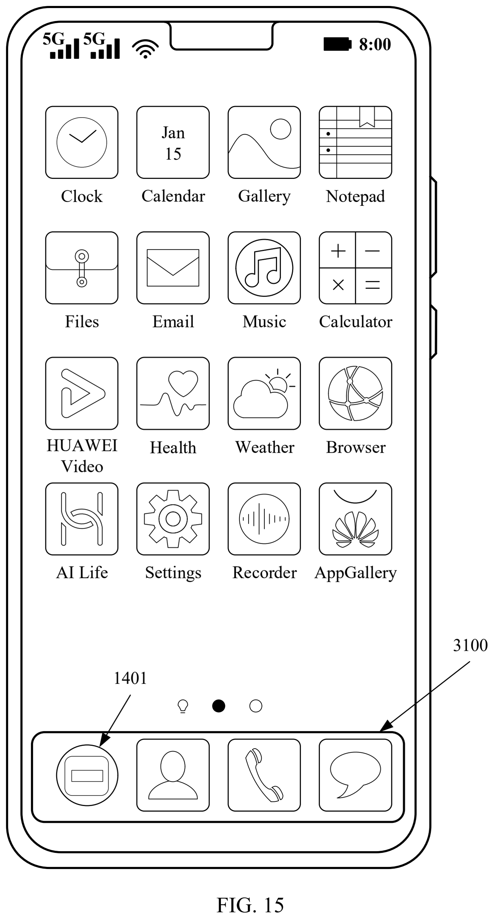

FIG. 14 shows a display interface 1400 of a "leftmost screen" (or referred to as "smart assistant") application of the second electronic device. The user interface 1400 of the application includes icons of a plurality of application functions, for example, a "scan" application function icon 1401. In response to an operation of the user dragging the "scan" application function icon 1401 to the taskbar 3100 in FIG. 15, the electronic device may display the "scan" application function icon 1401 on the taskbar 3100 shown in FIG. 15.

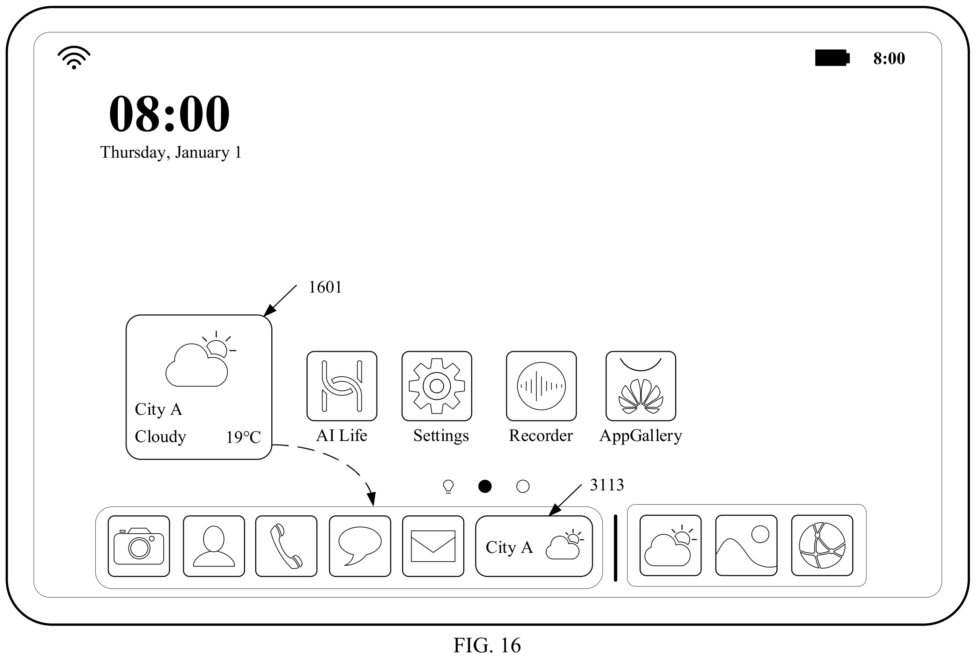

The user may further pin a plugin displayed on an interface of an electronic device application to the first display area 3110 of the taskbar 3100. As shown in FIG. 16, the second electronic device currently displays a user interface of the "desktop" application, and the user interface includes a "weather" plugin 1601. In response to an operation of the user dragging the "weather" plugin 1601 from the user interface of the "desktop" application to the first display area 3110, the second electronic device may display, in the first display area 3110, a third target icon 3113 corresponding to the "weather" plugin 1601. The third target icon 3113 and the "weather" plugin 1601 have a similar function, for example, displaying weather of city A.

In some examples, in response to an operation of the user tapping the third target icon 3113, the electronic device opens a weather details user interface of city A for the user in a full-screen window or a floating window. In some other examples, in response to an operation of the user sliding the third target icon 3113 left or right, the third target icon 3113 may display weather information at different times or at different places.

An icon of the "weather" plugin 1601 and the third target icon 3113 may have different shapes and sizes. For example, the icon of the "weather" plugin 1601 is a rounded square of 2 units × 2 units, and the third target icon 3113 is a rounded rectangle of 2 units × 1 unit.

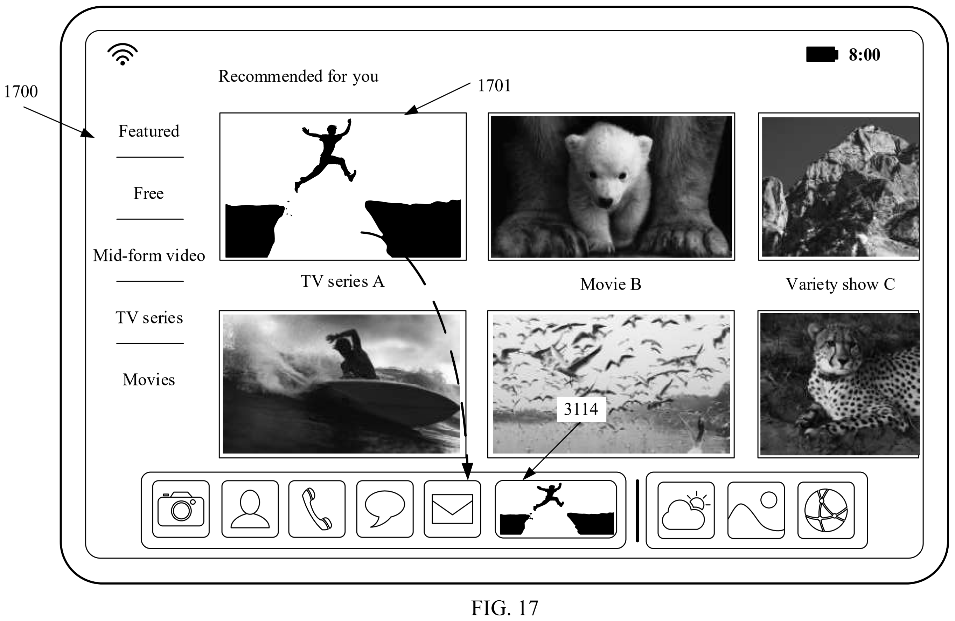

The user may further pin a video play icon to the first display area 3110. FIG. 17 to FIG. 21 show different implementations.

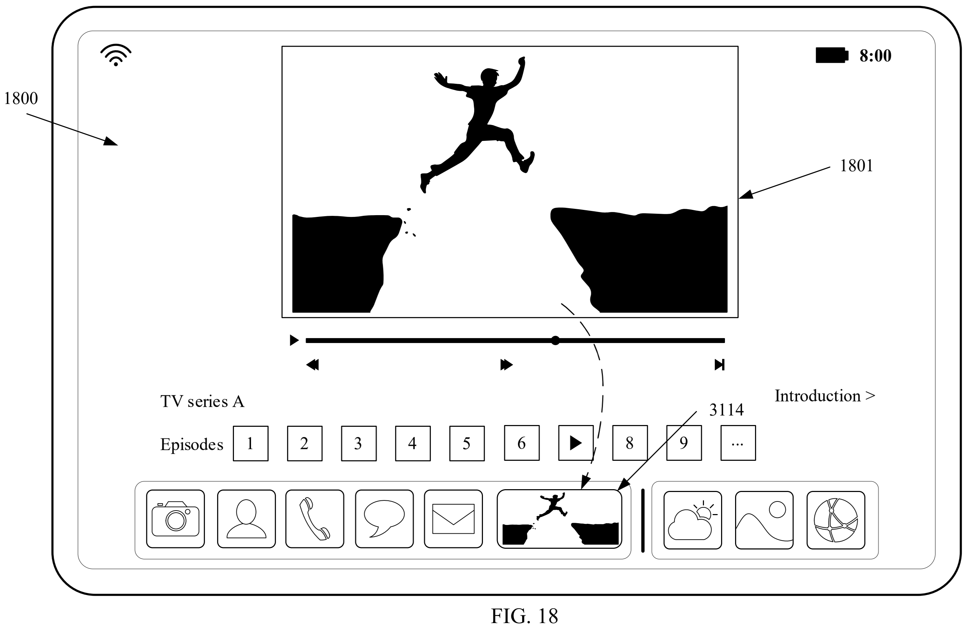

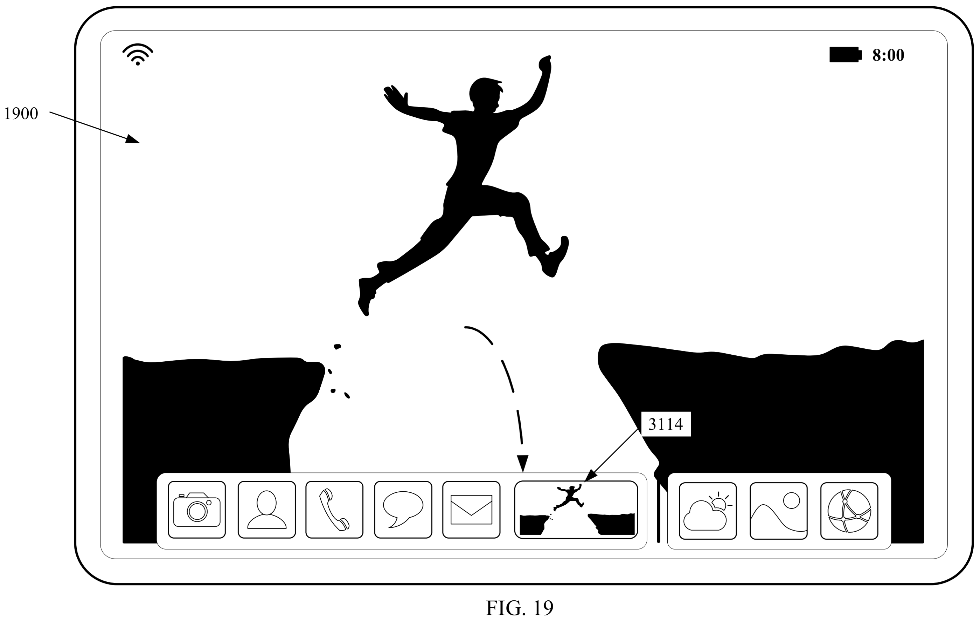

As shown in FIG. 17, the electronic device currently displays a first interface 1700 of a "video" application. The first interface 1700 displays a first play window having a plurality of videos or video sets. The play window may also be considered as a reference icon, for example, may be referred to as a video play icon. When the user taps the video play icon displayed on the first interface 1700, in response to the operation of the user, the electronic device may display a second interface 1800 of the "video" application shown in FIG. 18. The second interface 1800 includes a window (a second play window 1801) used to play a video and a related control used to control video playing. The second play window 1801 may also be considered as a reference icon, and may be referred to as a video play icon. Further, when the user controls full-screen play of the video through the control related to video playing, that is, the electronic device displays a third interface 1900 shown in FIG. 19, the video is played in a full-screen window manner. The third interface 1900 may also be referred to as a third play window 1900, and the third play window 1900 may also be considered as a reference icon, and may be referred to as a video play icon.

The user may drag the first play window 1701 shown in FIG. 17 to the first display area 3110 of the taskbar 3100, or drag the second play window 1801 shown in FIG. 18 to the first display area 3110 of the taskbar 3100, or drag the third play window 1901 shown in FIG. 19 to the first display area 3110 of the taskbar 3100, to add a fourth target icon 3114 to the first display area 3110. In response to an operation of the user tapping the fourth target icon 3114, the electronic device may display the second interface shown in FIG. 18 or the third interface shown in FIG. 19.

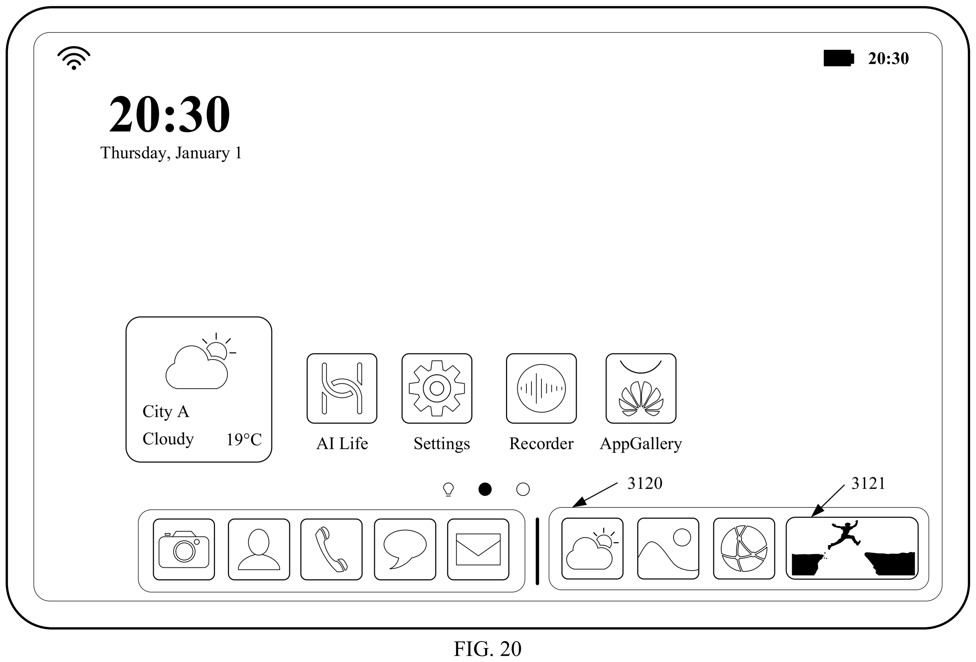

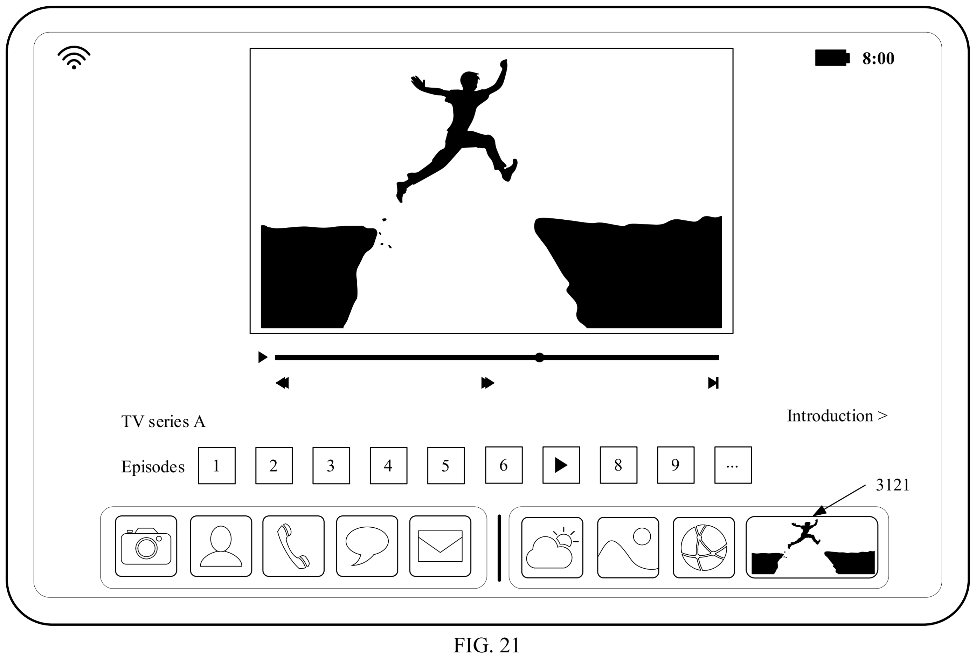

In some examples, in response to an operation of the user tapping the fourth target icon 3114, the electronic device may restore a play interface on which TV series A is played last time. For example, the user watches the seventh episode of TV series A at the 22^{nd} minute and 16^{th} second last time. When the user taps the play function control 1201, the electronic device displays a play interface of the seventh episode of TV series A at the 22^{nd} minute and 16^{th} second on the screen. FIG. 20 and FIG. 21 show other possible implementations of adding the fourth target icon 3114 to the first display area of the taskbar 3100. In FIG. 20, the electronic device may add a recommended application or a recommended application function to the second display area 3120 based on historical information and scenario information in use of the electronic device by the user.

For example, the user watches TV series A at about 8:30 p.m. every night in the past week. According to a use history or a use habit of the user using the electronic device, as shown in FIG. 20, the electronic device may display a first recommended icon 3121 on the second functional component 3120 at 8:30 p.m. every night.

Similarly, for example, as shown in FIG. 21, when watching duration of the user on the play interface of TV series A exceeds preset duration (for example, 45 minutes or duration of one episode), the electronic device may display the first recommended icon 3121 in the second display area 3120.

The first recommended icon 3121 may include related information of TV series A. For example, the first recommended icon 3121 may include a picture of a still of TV series A, and the first recommended icon 3121 may further include play information of TV series A played by the user. For example, the first recommended icon 3121 may be set with a badge, and the badge may be used to display an episode that the user watches TV series A last time. The first recommended icon 3121 may further display other information related to TV series A, for example, an update of a new episode of TV series A.

The user may drag the first recommended icon 3121 displayed in the second display area 3120 to the first display area 3110, so that the first recommended icon 3121 may be fixedly displayed in the first display area 3110 of the taskbar 3100. When the first recommended icon 3121 is displayed in the first display area 3110, the first recommended icon 3121 may be referred to as a fourth target icon 3114, and the fourth target icon 3114 may include information included in the first recommended icon 3121 displayed in the second display area 3120.

Optionally, the user may further add the first recommended icon 3121 to a display interface of the "desktop" application, a display interface of the "application drawer" application, or the like in one or more of the foregoing manners.

In a multi-task processing scenario, the electronic device may simultaneously display a plurality of windows on the screen, the plurality of windows may simultaneously display processing statuses of different tasks, and the plurality of windows may also be used as a plurality of input ports for the user to input information to the electronic device. The taskbar is used to manage statuses of a plurality of applications that are simultaneously running, so that management efficiency of the taskbar for an application on the electronic device can be improved.

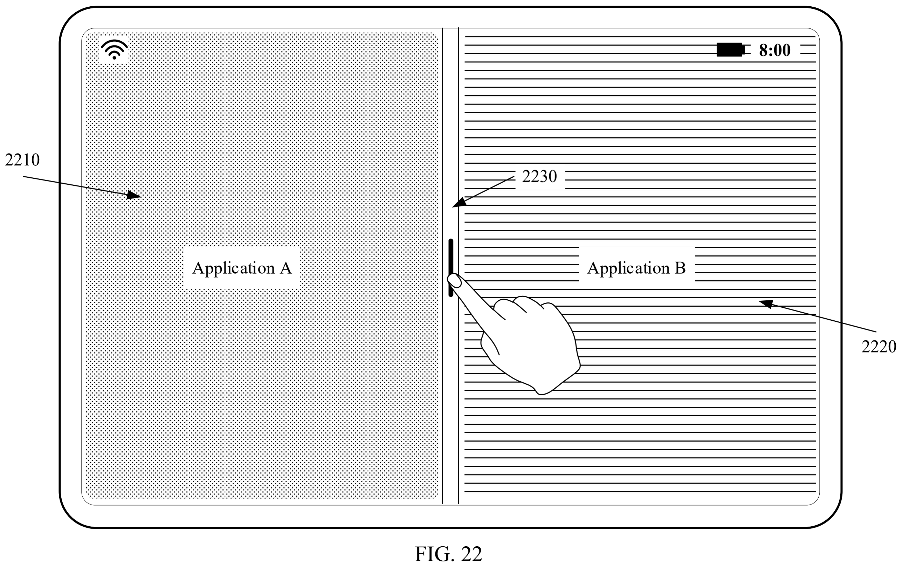

As shown in FIG. 22, the first electronic device simultaneously displays an application A and an application B in a split-screen manner, that is, the screen of the first electronic device includes three display areas. A display area A 2210 is used to display the application A, a display area B 2220 is used to display the application B, and the display area A and the display area B is separated by a display area C 2230, where the display area C 2230 may also be referred to as a separator bar 2230.

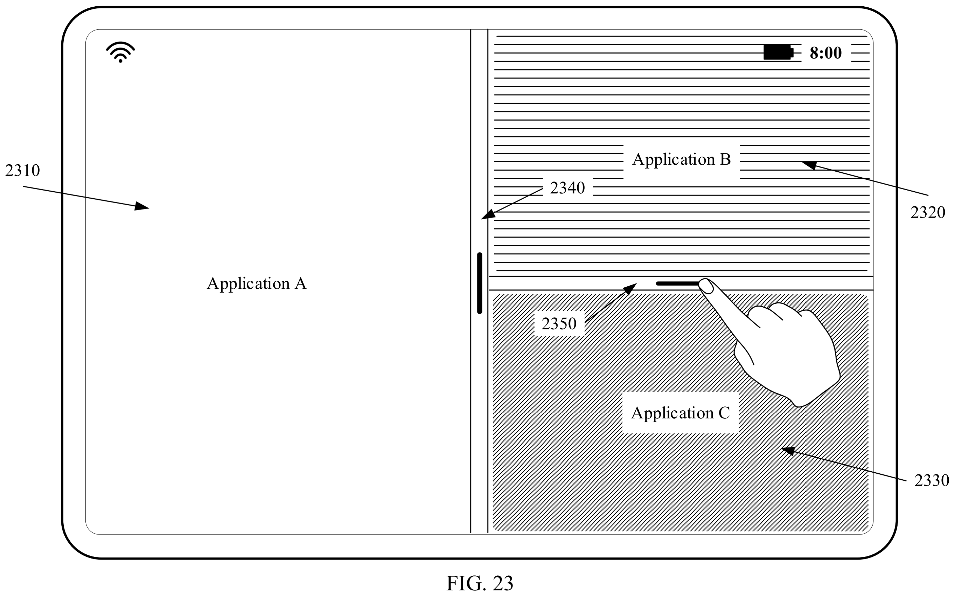

As shown in FIG. 23, the first electronic device simultaneously displays an application A, an application B, and an application C in a split-screen manner, that is, the screen of the first electronic device includes five display areas. A display area A 2310 is used to display the application A, a display area B 2320 is used to display the application B, a display area C 2330 is used to display the application C, the display area A and the display area B are separated by a display area D 2240, the display area A and the display area C are also separated by the display area D 2240, and the display area B and the display area C are separated by a display area E, where the display area D or the display area E that are used to separate different display areas may also be referred to as separator bars.

That the electronic device displays a plurality of applications in a split-screen manner may also be understood as that the electronic device simultaneously displays a plurality of split-screen windows, and each split screen window may display a corresponding application.

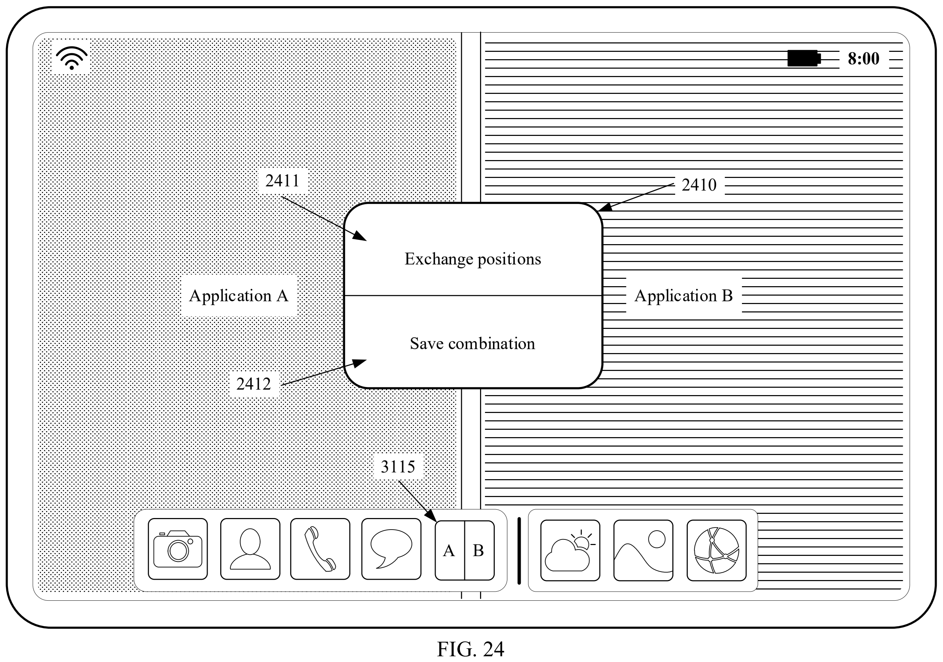

In a possible implementation, in response to an operation of the user tapping (or touching and holding) the separator bar in FIG. 22 or FIG. 23, the first electronic device may display a first function control 2410 shown in FIG. 24. The first function control 2410 may include one or more function options. For example, the first function control 2410 may include a first function option 2411 and a second function option 2412. The first function option 2411 may also be referred to as an "exchange positions" function option, a "left-right exchange" function option, an "up-down exchange" function option, or the like. The first function option 2411 may be used to exchange display positions of the application A and the application B that are displayed in the split-screen state.

The second function option 2412 may also be referred to as a "save combination" function option, a "save split-screen combination" function option, a "save window combination" function option, or the like. The second function option 2412 is used to save a state in which the application A and the application B are displayed on split screens.

Herein, saving a state in which a plurality of applications are displayed on split screens may be saving display states of the plurality of applications displayed on split screens, or may be saving display states of the plurality of applications displayed on split screens and a running status of each application.

Specifically, in response to an operation of the user selecting the second function option 2412, the electronic device may add a "split-screen state" function icon 3115 to the first display area 3110 of the taskbar 3100, or the first electronic device may add the "split-screen state" function icon 3115 to a display interface of the "desktop" application or the "application drawer" application. The "split-screen state" function icon 3115 may also be referred to as a fifth target icon 3115 or the like.

An appearance of the fifth target icon 3115 may be determined based on a split-screen display manner of an application. For example, if the application A and the application B are displayed in a "one above the other" split-screen display manner, the fifth target icon 3115 may also be displayed in a "one above the other" style, in other words, an upper half and a lower half of the fifth target icon 3115 are separated by a dividing line. For another example, if the application A, the application B, and the application C are displayed in a left, upper right, and lower right split-screen manner, the fifth target icon 3115 may also be an icon that is divided into three areas: left area, upper right area, and lower right area.

In response to an operation of the user tapping the fifth target icon 3115, the electronic device may display, on the screen, the state in which the plurality of applications are displayed on split screens. Herein, the state in which the plurality of applications are displayed on split screens may be a historical state of displaying the plurality of applications on split screens, or may be a real-time state of displaying the plurality of applications on split screens.

For example, the historical state of split-screen display may be understood as a state in which the application A and the application B run on split screens when the user selects the second function option 2412. In other words, if the foregoing split-screen display state is a historical split-screen display state, and the user selects the second function option 2412 at a moment t1, when the user taps the fifth target icon 3115, the electronic device displays running statuses of the application A and the application B at the moment t1, and the application A and the application B are still displayed in a split-screen display manner at the moment t1.

The real-time state of split-screen display may be understood as follows: When the user selects the second function option 2412, the first electronic device adds the foregoing "split-screen state" function icon, and the first electronic device may simultaneously start to record running statuses of the application A and the application B. In response to an operation of the user tapping the fifth target icon 3115 at a moment t2, the first electronic device may display, on the screen, running statuses of the application A and the application B at the moment t2, and display the application A and the application B in a split-screen display manner. The split-screen display manner of the application A and the application B is consistent with a split-screen display manner of the application A and the application B when the user selects the second function option 2412.

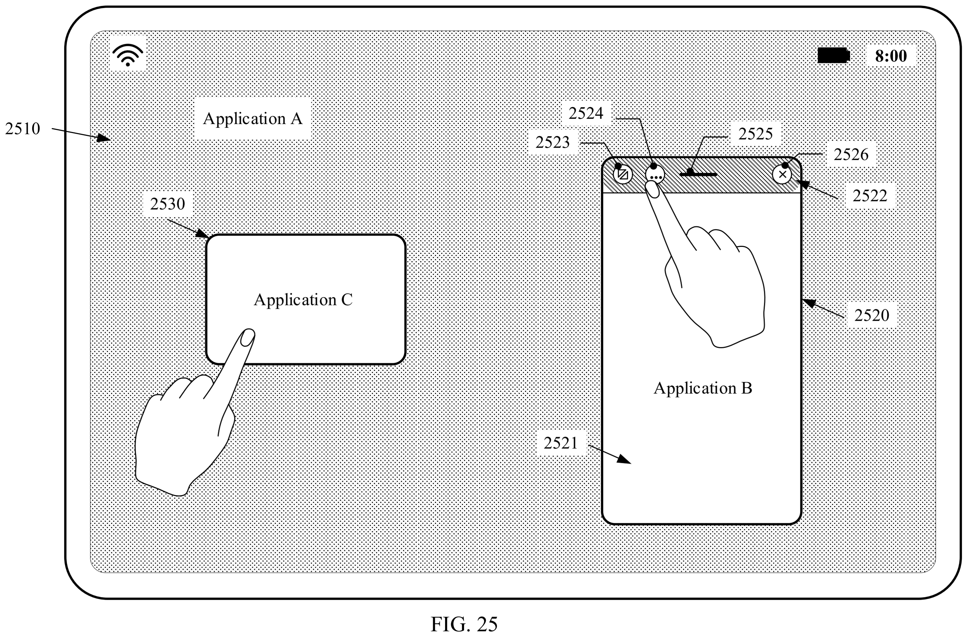

FIG. 25 shows another user interface for combination display of a plurality of applications. In FIG. 25, an application A is displayed in a full-screen window, and an application B and an application C are separately displayed in a floating window. In other words, the application B is displayed in a third window, and the application C is displayed in a fourth window. Both the third window and the fourth window are floating windows, and control manners of the third window and the fourth window may be different. The following first briefly describes the third window and the fourth window.

As shown in FIG. 25, the third window 2520 may include an application interface display area 2521 and a window control display area 2522. The application interface display area 2521 may be used to display an interface of an application and receive an input of a user for the application. The window control display area 2522 may be used to display a function control that may be used to control the third window 2520.

Specifically, the window control display area 2522 may include a "full-screen display" control 2523, a "more functions" control 2524, a "move" control 2525, a "close" control 2526, and the like. In response to an operation of the user selecting the "full-screen display" control 2523, the electronic device may display the application B in a full-screen manner. In response to an operation of the user selecting the "move" control 2525, the electronic device may adjust a position of the third window 2520 on the screen of the electronic device based on a gesture operation of the user. In response to an operation of the user selecting the "close" control 2526, the electronic device may close the third window 2520.

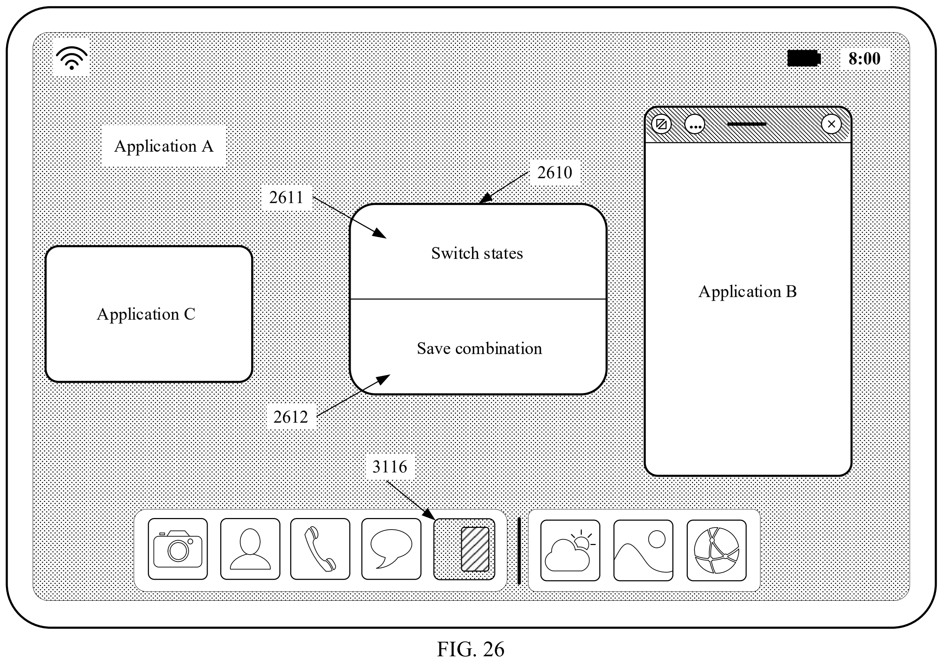

In response to an operation of the user selecting the "more functions" control 2524, the electronic device may display the second function control 2610 shown in FIG. 26. The second function control 2610 may include one or more function options. For example, the second function control 2610 may include a third function option 2611 and a fourth function option 2612. The third function option 2611 may also be referred to as a "switch states" function option, an "exchange states" function option, or the like. The fourth function option 2612 may also be referred to as a "save combination" function option, a "save application combination" function option, a "save window combination" function option, or the like.

In response to an operation of the user selecting the third function option 2611, the electronic device may switch a display manner of an application displayed in a full-screen window and a display manner of an application displayed in a floating window.

For example, the application A and the application B are displayed on the screen of the electronic device simultaneously. The application A is displayed in a full-screen window manner, and the application B is displayed in a floating window manner. When the user taps the third function option, the electronic device may display the application B in a full-screen window manner, and display the application A in a floating window manner. If the application A, the application B, and the application C are displayed on the screen of the electronic device simultaneously, the application A is displayed in a full-screen window manner, and the application B and the application C are displayed in a floating window manner, when the user taps the third function option, the electronic device may display the application B in a full-screen window manner and display the application A and the application C in a floating window manner. When the user taps the third function option again, the electronic device may display the application C in a full-screen window manner, and display the application B and the application A in a floating window manner. When the user taps the third function option yet again, the electronic device may display the application A in a full-screen window manner, and display the application B and the application C in a floating window manner.

In response to an operation of the user selecting the fourth function option, the electronic device may save a state of combination display of a plurality of windows or a plurality of applications that are currently displayed on the screen of the electronic device.

Herein, saving a state of combination display of a plurality of windows may be saving a display state of combination display of a plurality of applications, or may be saving a display state of combination display of a plurality of applications and a running status of each application.

Specifically, the electronic device may add a "window combination" function icon 3116 shown in FIG. 26 to the first display area 3110 of the taskbar 3100, or the electronic device may add the "window combination" function icon 3116 to a display interface of the "desktop" application, or the electronic device may add a "window combination" function icon 3116 to a display interface of another application like an "application drawer" application. The "window combination" function icon 3116 may also be referred to as a sixth target icon 3116. In response to an operation of the user tapping the sixth target icon 3116, the electronic device may display, on the screen, a state of combination display of a plurality of windows or a plurality of applications.

Herein, the state of combination display of the plurality of windows may refer to a historical state of combination display of applications corresponding to the plurality of windows, or may refer to a real-time state of combination display of applications corresponding to the plurality of windows. Specifically, the historical state of combination display may be understood as running statuses of the applications corresponding to the plurality of windows when the user selects the fourth function option 2612. In other words, if the state of the foregoing combination display refers to the historical state of combination display, and if the user selects the fourth function option 2612 at a moment t3, when the user taps the sixth target icon 3116, the electronic device displays running statuses of the plurality of applications at the moment t3, and the plurality of applications are still displayed in a manner of displaying the plurality of windows at the moment t3.

The real-time state of combination display may be understood as follows: When the user selects the fourth function option 2612, the electronic device adds the foregoing "window combination" function icon, and the electronic device may simultaneously start to record running statuses of the applications corresponding to the plurality of windows. In response to an operation of the user tapping the sixth target icon 3116 at a moment t4, the electronic device may display, on the screen, running statuses of the plurality of applications at the moment t4 in a window combination display manner. A display manner of each window is consistent with a display manner of each window at the moment t4.

The fourth window 2530 is configured to display a user interface of an application. As shown in FIG. 25, the user may tap and drag a display area of the fourth window 2530, or touch and hold and drag a display area of the fourth window 2530, to adjust a display position of the fourth window 2530 on the screen. In some examples, in response to an operation of the user touching and holding the display area of the fourth window 2530, the electronic device may further display the second function control 2610 shown in FIG. 26. The second function control 2610 may include a plurality of function options. For descriptions of related function options, refer to the foregoing descriptions. Details are not described herein again.

The electronic device may further implement, via the second display area 3120 of the taskbar 3100, the foregoing function of saving the state of split-screen display of the applications and the state of multi-window combination display.

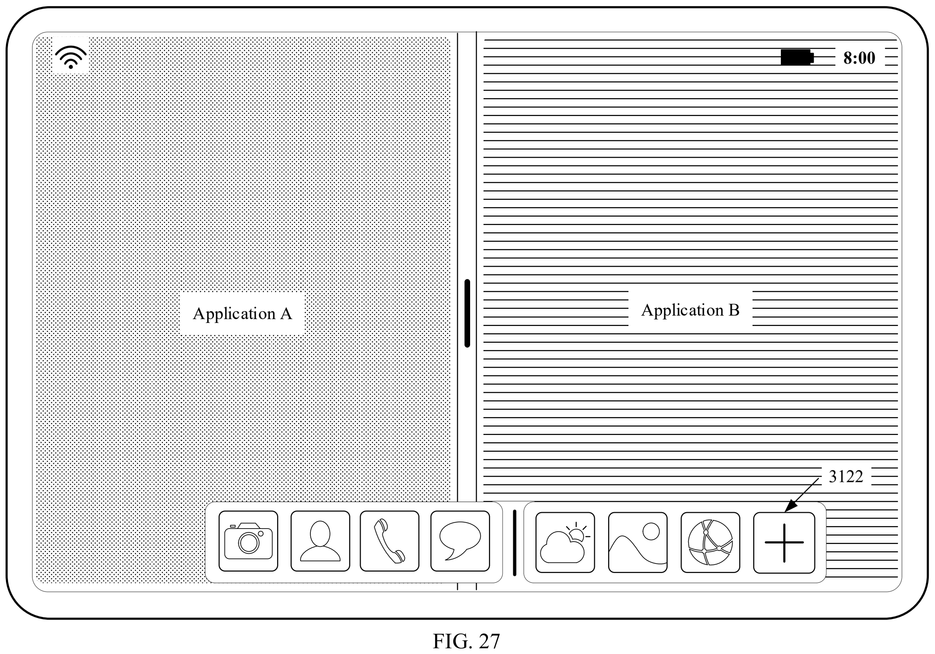

In some examples, as shown in FIG. 27, an application A and an application B are displayed on the screen of the electronic device in a split-screen display manner, and a display manner of the application on the screen is detected. The electronic device may add an "add" function icon 3122 to the second display area 3120. The "add" function icon 3122 may also be referred to as a second recommended icon 3122. In response to an operation of the user tapping the second recommended icon 3122, the electronic device may save a state in which the application A and the application B are displayed on split screens. In other words, in this case, a function implemented by tapping the second recommended icon 3122 by the user is similar to the function implemented by selecting the second function option 2412 by the user in FIG. 24. Specifically, the electronic device may add the fifth target icon 3115 shown in FIG. 24 to the first display area 3110, or the electronic device may add the fifth target icon 3115 to a display interface of an application like the "desktop" application and/or the "application drawer" application.

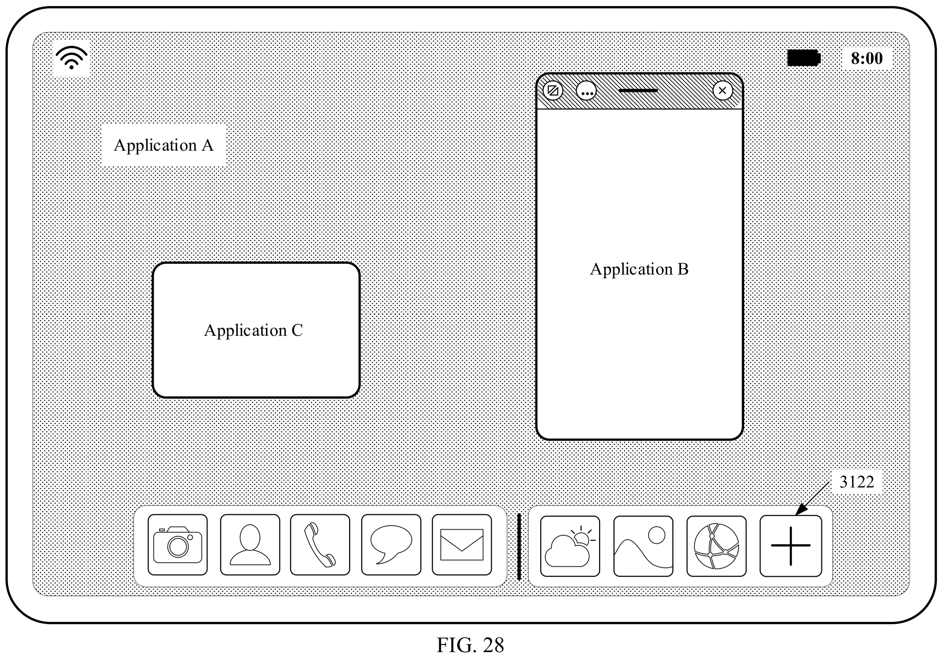

In some other examples, as shown in FIG. 28, an application A, an application B, and an application C are displayed on the screen of the electronic device in a window combination manner, and a display manner of the application on the screen is detected. The electronic device may display the foregoing second recommended icon 3122 in the second display area 3120, and in response to an operation of the user tapping the second recommended icon 3122, the electronic device may save a state of combination display of a plurality of windows. In other words, in this case, a function implemented by tapping the second recommended icon 3122 by the user is similar to the function implemented by selecting the third function option 2612 by the user in FIG. 26. Specifically, the electronic device may add the sixth target icon 3116 shown in FIG. 26 to the first display area 3110, or the electronic device may add the sixth target icon 3116 to a display interface of an application like the "desktop" application and/or the "application drawer" application.

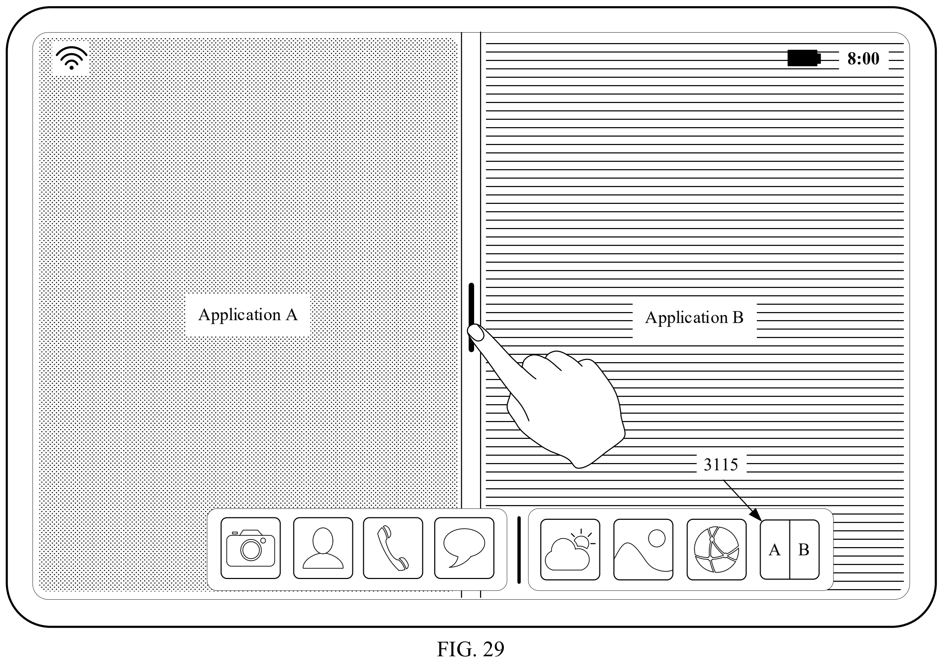

In some other examples, as shown in FIG. 29, an application A and an application B are displayed on the screen of the electronic device in a split-screen display manner, and a display manner of the application on the screen is detected. The electronic device may add a "split-screen state" function icon 3115 to the second functional component 1120, in response to an operation of the user dragging the "split-screen state" function icon 3115 displayed in the second display area 3120 to the first display area 3110, the electronic device may add the "split-screen state" function icon 3115 to the first display area 3110. Alternatively, in response to an operation of the user dragging the "split-screen state" function icon 3115 displayed in the second display area 3120 to a display interface of the "desktop" application and/or the "application drawer" application, the electronic device may add the "split-screen state" function icon 3115 to the display interface of the corresponding application.

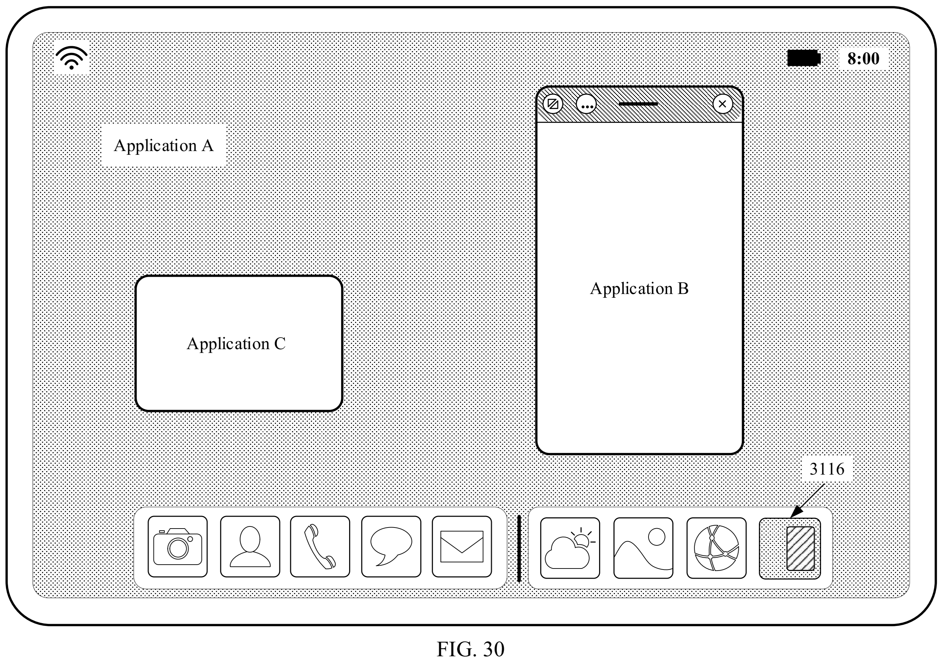

In some other examples, as shown in FIG. 30, an application A, an application B, and an application C are displayed on the screen of the electronic device in a window combination manner, and a display manner of the application on the screen is detected. The electronic device may add a "window combination" function icon 3116 to the second display area 3120, in response to an operation of the user dragging the "window combination" function icon 3116 displayed in the second display area 3120 to the first display area 3110, the electronic device may add the "window combination" function icon 3116 to the first display area 3110. Alternatively, in response to an operation of the user dragging the "window combination" function icon 3116 displayed in the second display area 3120 to a display interface of the "desktop" application and/or the "application drawer" application, the electronic device may add the "window combination" function icon 3116 to the display interface of the corresponding application.

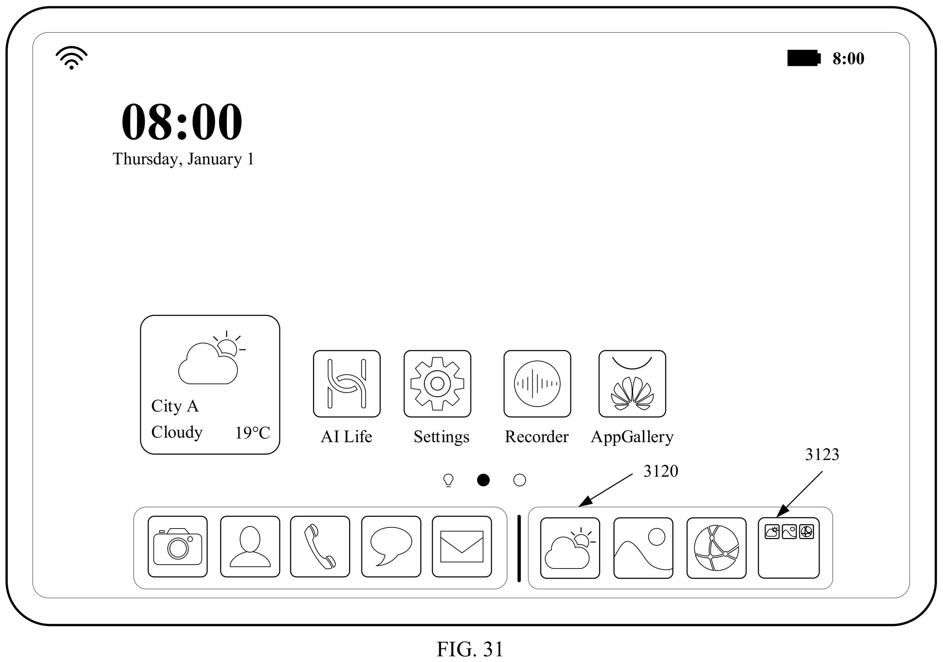

The taskbar 3100 may be further configured to manage a recent task list of the electronic device. As shown in FIG. 31, the second display area 3120 of the taskbar 3100 may further display a third recommended icon 3123. The third recommended icon 3123 indicates a recent task list of the electronic device. In some examples, the third recommended icon 3123 may be a folder icon, the folder may include a plurality of task icons, and the task icon indicates a task in the recent task list. In this case, the third recommended icon 3123 may also be referred to as a target folder 3123 or a recommended folder 3123.

In some examples, the application A, the application B, and the application C are three applications or application functions recently opened by the user. In other words, the application A, the application B, and the application C are three tasks in the recent task list of the electronic device. The electronic device may display a target folder 3123 in the second display area 3129. The target folder 3123 may include an icon of the application A, an icon of the application B, and an icon of the application C.

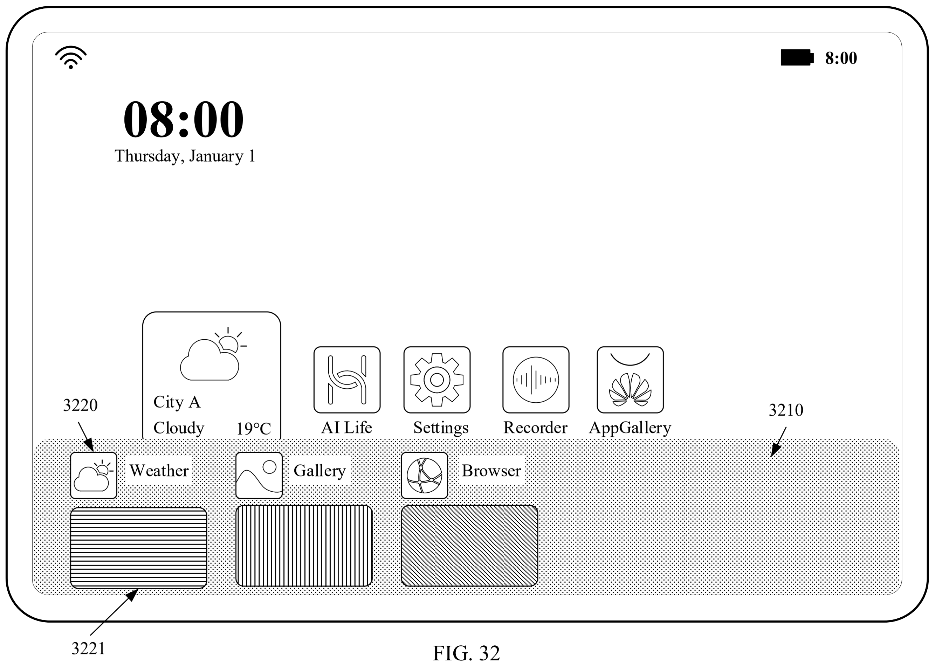

In response to an operation of the user opening the target folder 3213, for example, tapping the target folder 3123 or dragging the target folder 3123 to a display area outside the taskbar 3100, the electronic device may display a task list control 3210 shown in FIG. 32. A status display unit of the application A, a status display unit of the application B, and a status display unit of the application C may be displayed in a display area of the task list control 3210.

The status display unit may be configured to display a running status of a corresponding application. For example, in FIG. 32, the status display unit of the application A may include the icon 3220 of the application A and a running status thumbnail 3221 (an application card or an application window) of the application A. In response to an operation of the user tapping the icon 3220 of the application A or the running status thumbnail 3221 of the application A, the electronic device may display the application A on the screen, and the application A may be displayed in a full-screen window manner or may be displayed in a floating window manner. A specific manner of displaying the application A may be determined based on a current default opening manner of an icon on the taskbar 3100 of the electronic device and a setting of the user. For specific content, refer to related content in the foregoing embodiment.

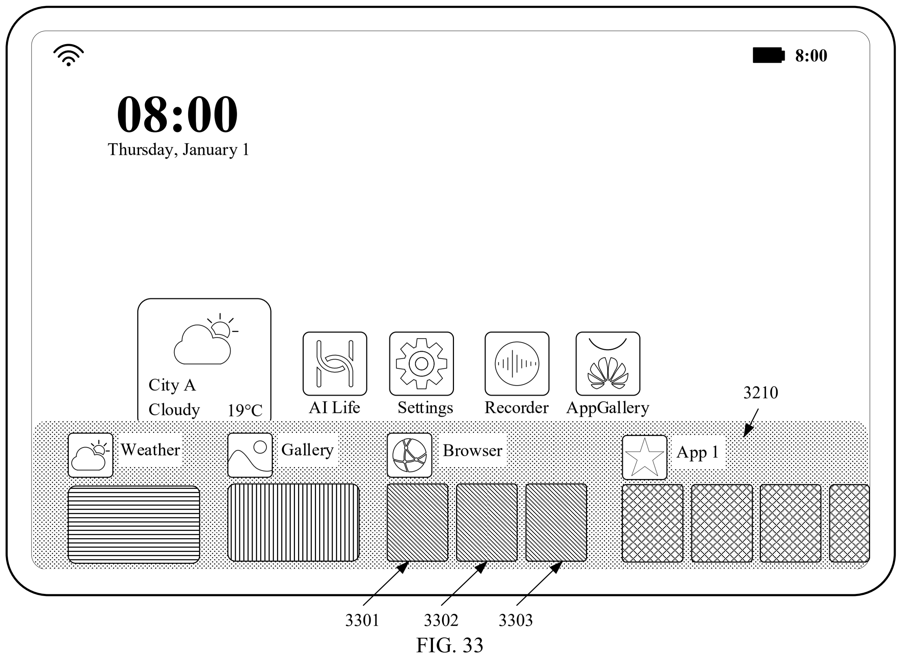

As shown in FIG. 33, when a same application includes a plurality of instances, in the display area of the task list control 3210, a plurality of running status thumbnails (or application windows, application cards, task windows, and task cards) of the application may be displayed below the application. For example, when a document management application simultaneously opens a slide, a sheet, a document, and a picture, four application cards may be simultaneously displayed below an icon of the document management application in the display area of the task list control 3210. The four application cards are respectively used to display the slide opened by the document management application, the sheet opened by the document management application, the document opened by the document management application, and the picture opened by the document application. For another example, a browser application may simultaneously open three browsing pages, and three application windows may be simultaneously displayed below an icon of the browser application in the display area of the task list control 3210. The three application windows respectively correspond to three browsing pages (a window 3301, a window 3302, and a window 3303 in FIG. 33) opened by the browser application.

The user may manage different application instances by operating a plurality of application cards or application windows included in a same application. For example, in response to an operation of the user tapping a first application card, the electronic device may display a user interface of an application instance corresponding to the first application card. For another example, in response to an operation of the user sliding up a second application card, the electronic device may delete an application instance corresponding to the second application card from the recent task list. For another example, in response to an operation of the user touching and holding a third application card, the electronic device may lock an application instance corresponding to the third application card.

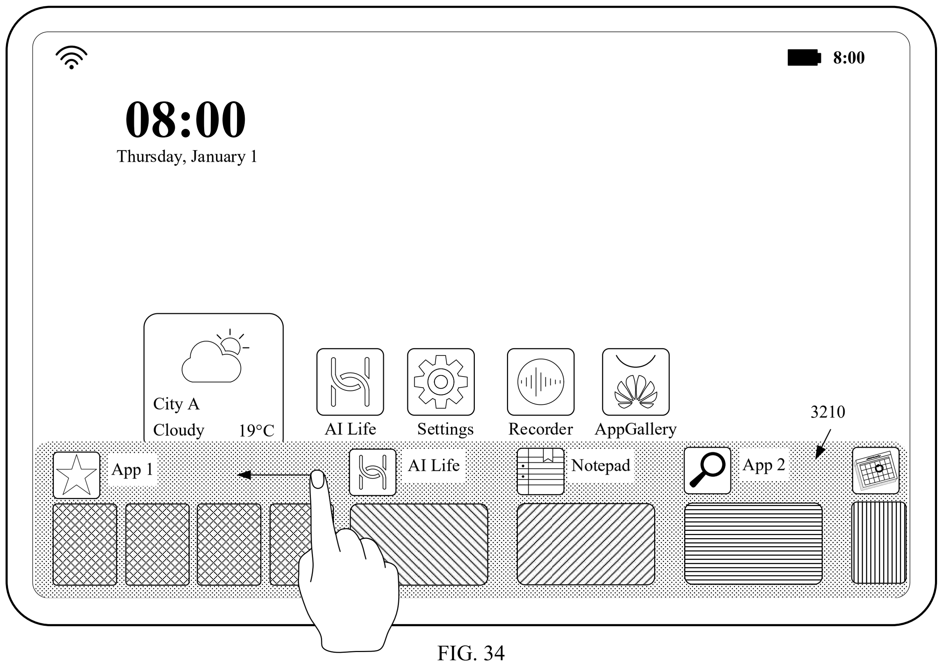

As shown in FIG. 34, when application status display units of all tasks in the task list cannot be displayed in the display area of the task list control 3210, the user may perform left or right sliding in the display area of the task list control 3210, to display an application status display unit that is not displayed in the display area of the task list control 3210.

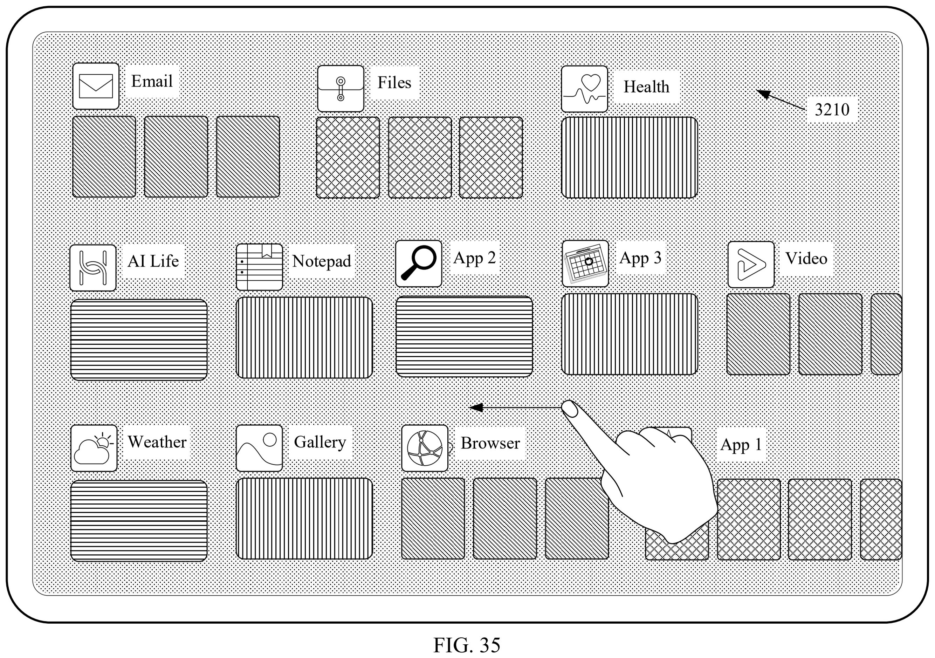

As shown in FIG. 35, the user may further perform up sliding in the display area of the task list control 3210, to enlarge the display area of the task list control 3210, or the user may further perform up sliding in the display area of the task list control 3210 to expand the task list control 3210.

In some examples, in response to an operation of the user performing up sliding in the display area of the task list control 3210, the electronic device displays an interface of the task list control 3210 in full screen shown in FIG. 35.

In some other examples, in response to an operation of the user performing up sliding in the display area of the task list control 3210 for the first time, the electronic device displays two rows of task lists in the display area of the task list control 3210, or the electronic device displays a task list on two thirds of a display area of the screen. In response to an operation of the user sliding up again, the electronic device displays the interface of the task list control 3210 in full screen shown in FIG. 35.

For content that cannot be completely displayed in an expanded state of the display area of the task list control 3210, the user may perform left or right sliding in the display area of the task list control 3210, to display an application status display unit that is not displayed in the display area of the task list control 3210.

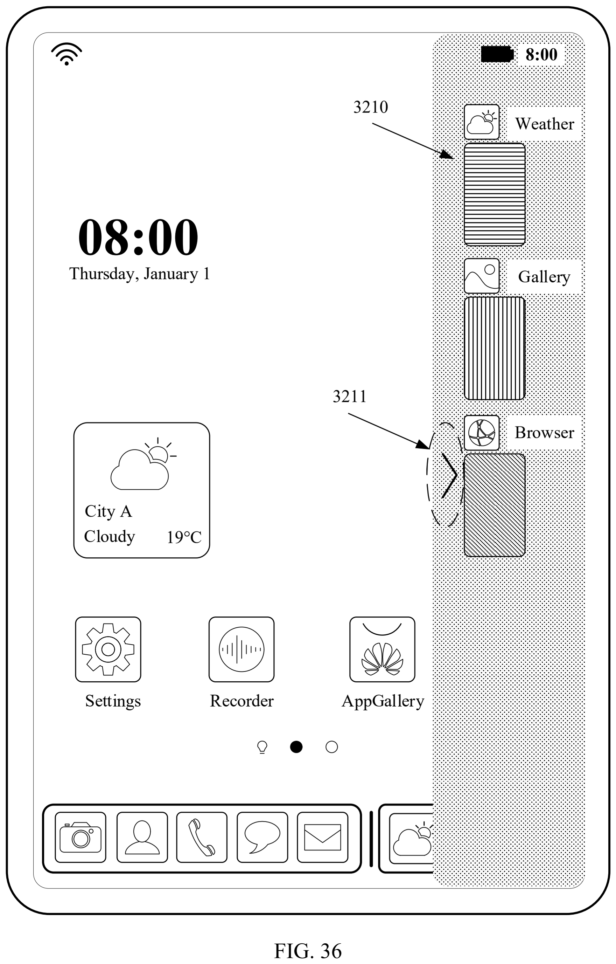

With reference to FIG. 32 and FIG. 36, in response to the operation of the user opening the target folder, the electronic device may display the recent task list of the electronic device on a same edge as the taskbar 3100 (the display manner of the task list control 3210 in FIG. 32), or the electronic device may display a recent task list on a different edge from the taskbar 3100 (the display manner of the task list control 3210 in FIG. 33). As shown in FIG. 33, the task list control 3210 may further include an acceptance function control 3211. When the task list control 3210 is in an expanded state, the task list control 3210 may be accepted to an edge of the screen of the electronic device or hidden by tapping the acceptance function control 3211.

Similar to FIG. 34, the task list control 3210 displayed on a side edge of the electronic device in FIG. 36 may also display, in response to an operation of the user sliding up or down, a status display unit of an application that is currently not displayed in the display area of the task list control 3210. Similar to FIG. 35, the task list control 3210 displayed on the side edge of the electronic device in FIG. 36 may also expand, in response to an operation of the user sliding left or right, the task list control 3210, or display the task list control 3210 in a full-screen display manner.

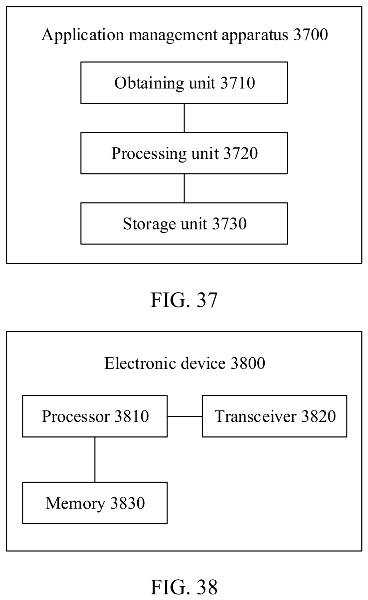

Based on a same inventive concept as the foregoing method embodiments, as shown in FIG. 37, an embodiment of this application further provides an application management apparatus 3700. The application management apparatus includes an obtaining unit 3710 and a processing unit 3720. The obtaining unit is configured to obtain information entered by the user via the electronic device in the embodiments shown in FIG. 3 to FIG. 36, for example, obtain an operation of the user selecting a first function option. The processing unit is configured to perform a processing operation performed by the electronic device in the embodiments shown in FIG. 3 to FIG. 18, for example, saving a combination display manner of a plurality of windows.

Optionally, the application management apparatus 3700 may further include a storage unit 3730, configured to store program code and data of the program management apparatus 3700.

FIG. 38 is a block diagram of an electronic device 3800 according to an embodiment of this application. As shown in the figure, the electronic device 3800 includes at least one processor 3810 and a transceiver 3820. The processor 3810 is coupled to a memory, and is configured to execute instructions stored in the memory, to control the transceiver 3820 to send a signal and/or receive a signal.

Optionally, the electronic device 3800 further includes a memory 3830, configured to store instructions.

In some embodiments, the processor 3810 and the memory 3830 may be integrated into one processing apparatus, and the processor 3810 is configured to execute program code stored in the memory 3830 to implement the foregoing functions. During specific implementation, the memory 3830 may alternatively be integrated into the processor 3810, or may be independent of the processor 3810.

In some embodiments, the transceiver 3820 may include a receiver (or referred to as a receive machine) and a transmitter (or referred to as a transmit machine).

The transceiver 3820 may further include an antenna. There may be one or more antennas. The transceiver 3820 may alternatively be a communication interface or an interface circuit.

When the electronic device 3800 is a chip, the chip includes a transceiver unit and a processing unit. The transceiver unit may be an input/output circuit or a communication interface. The processing unit may be a processor, a microprocessor, or an integrated circuit integrated on the chip.

In an implementation process, steps in the foregoing method can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware in the processor. To avoid repetition, details are not described herein again.

An embodiment of this application further provides a computer-readable storage medium. The computer-readable storage medium stores computer instructions for implementing the method performed by the electronic device in the foregoing method embodiment.

For example, when the computer program is executed by a computer, the computer is enabled to implement the method performed by the electronic device in the foregoing method embodiment. For explanations and beneficial effects of related content of any one of the apparatuses provided above, refer to the corresponding method embodiment provided above. Details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An application management method, applied to an electronic device, wherein the method comprises:
displaying, by the electronic device, a user interface of a target application, wherein the user interface of the target application comprises a reference icon, and the reference icon is any one of the following icons: an applet icon, a quick application icon, an application plugin icon, or a video play icon;
displaying, by the electronic device, a target icon on a taskbar in response to a target operation, wherein the target icon corresponds to the reference icon, and the target operation is dragging the reference icon from the user interface of the target application to the taskbar; and
displaying, by the electronic device in response to an operation performed on the target icon, a user interface of an application corresponding to the reference icon.

2. The method according to claim 1, wherein when the taskbar is hidden, the method further comprises:
displaying, by the electronic device, the taskbar in response to the target operation.

3. The method according to claim 1 or 2, wherein displaying, by the electronic device, the user interface of the application corresponding to the reference icon comprises:
displaying, by the electronic device, the user interface of the application corresponding to the reference icon in a full-screen window manner or a floating window manner.

4. The method according to any one of claims 1 to 3, wherein the application plugin icon indicates any one of the following: a target desktop plugin, a target desktop card, a target leftmost screen plugin, or a target leftmost screen card.

5. The method according to claim 4, wherein the target icon is used to display information displayed by the target desktop plugin, or the target icon is used to display information displayed by the target desktop card, or the target icon is used to display information displayed by the target leftmost screen plugin, or the target icon is used to display information displayed by the target leftmost screen card.

6. The method according to any one of claims 1 to 3, wherein the video play icon indicates a play card of a target video or a play window of the target video.

7. The method according to claim 6, wherein displaying, by the electronic device, the user interface of the application corresponding to the reference icon comprises:
displaying, by the electronic device, a play interface of the target video.

8. An application management method, applied to an electronic device, wherein the method comprises:
displaying, by the electronic device, a target icon on a taskbar in response to a target operation, wherein the target icon indicates a combination display manner of a first window and a second window, and the first window and the second window are any one of the following: a full-screen window, a split-screen window, or a floating window; and
displaying, by the electronic device, the first window and the second window in the combination display manner in response to an operation performed on the target icon.

9. The method according to claim 8, wherein the taskbar comprises a first display area and a second display area, the first display area is used to display a resident icon, the second display area is used to display a recommended icon, the resident icon indicates a resident function, the recommended icon indicates a recommended function, and displaying, by the electronic device, the target icon on the taskbar comprises:
displaying, by the electronic device, the target icon in the second area.

10. The method according to claim 8, wherein the taskbar comprises a first display area and a second display area, the first display area is used to display a resident icon, the second display area is used to display a recommended icon, the resident icon indicates a resident function, the recommended icon indicates a recommended function, and when the target icon is displayed in the second display area, the method further comprises:
displaying, by the electronic device, the target icon in the first display area in response to an operation of dragging the target icon from the second display area to the first display area.

11. The method according to claim 8, wherein the taskbar comprises a first display area and a second display area, the first display area is used to display a resident icon, the second display area is used to display a recommended icon, the resident icon indicates a resident function, the recommended icon indicates a recommended function, and the method further comprises:
displaying, by the electronic device, a first recommended icon in the second area, wherein the first recommended icon indicates to save the combination display manner of the first window and the second window; and
displaying, by the electronic device, the target icon on the taskbar in response to the target operation comprises:
displaying, by the electronic device, the target icon in the first display area in response to an operation performed on the first recommended icon.

12. The method according to claim 8, wherein the first window is a floating window; and
displaying, by the electronic device, the target icon on the taskbar in response to the target operation comprises:
displaying, by the electronic device, a prompt control in response to an operation of touching and holding the first window, wherein the prompt control is used to prompt to save the combination display manner of the first window and the second window; and
displaying, by the electronic device, the target icon on the taskbar in response to a confirmation operation.

13. The method according to any one of claims 8 to 12, wherein the combination display manner comprises any one of the following:
both the first window and the second window are displayed in a split-screen window manner;
or
one of the first window and the second window is displayed in a full-screen window manner, and the other window is displayed in a floating window manner; or
both the first window and the second window are displayed in a floating screen window manner; or
one of the first window and the second window is displayed in a split-screen window manner, and the other window is displayed in a floating window manner.

14. An application management method, applied to an electronic device, wherein the method comprises:
displaying, by the electronic device, a target folder on a taskbar, wherein the target folder indicates a recent task list, the target folder comprises at least one task icon, and the at least one task icon indicates a task in the recent task list; and
displaying, by the electronic device, the recent task list in response to an operation of opening the target folder.

15. The method according to claim 14, wherein the taskbar comprises a first display area and a second display area, the first display area is used to display a resident icon, the second display area is used to display a recommended icon, the resident icon indicates a resident function, the recommended icon indicates a recommended function, and displaying, by the electronic device, the target folder on the taskbar comprises:
displaying, by the electronic device, the target folder in the second display area.

16. The method according to claim 14 or 15, wherein the operation of opening the target folder comprises: tapping the target folder or dragging the target folder to a display area outside the taskbar.

17. The method according to any one of claims 14 to 16, wherein the at least one task icon comprises an icon of a target application, the target application comprises a plurality of application instances, and the icon of the target application indicates the plurality of application instances;
displaying, by the electronic device, the recent task list comprises:
displaying, by the electronic device, a plurality of application cards, wherein the plurality of application cards correspond to the plurality of application instances; and
the method further comprises:
displaying, by the electronic device in response to an operation performed on a target application card, a user interface of an application instance corresponding to the target application card, wherein the plurality of application cards comprise the target application card.

18. An electronic device, comprising a processor and a memory, wherein the memory is configured to store program instructions, and the processor is configured to invoke the program instructions to perform the method according to any one of claims 1 to 7, claims 8 to 13, or claims 14 to 17.

19. An application management apparatus, comprising a module configured to implement the method according to any one of claims 1 to 7, claims 8 to 13, or claims 14 to 17.

20. A computer program product, wherein the computer program product comprises computer program code; and when the computer program code is run on a computer, the method according to any one of claims 1 to 7, claims 8 to 13, or claims 14 to 17 is performed.

21. A computer-readable storage medium, wherein the computer-readable storage medium stores a computer program; and when the computer program is executed by a computer, the method according to any one of claims 1 to 7, claims 8 to 13, or claims 14 to 17 is implemented.

22. A chip product, comprising a processor, configured to read instructions stored in a memory, wherein when the processor executes the instructions, the chip is enabled to implement the method according to any one of claims 1 to 7, claims 8 to 13, or claims 14 to 17.
